# EUROPÄISCHE PATENTSCHRIFT

(11) **EP 2 112 205 B1**
(45) Veröffentlichungstag und Bekanntmachung des Hinweises auf die Patenterteilung: **15.06.2011**
(21) Anmeldenummer: 09005053.5
(22) Anmeldetag: 06.04.2009
(51) Int. Cl.: C09D 7/02, C09D 7/12, C09D 175/04, C08G 18/28, C08G 18/32, C08G 18/48, C08G 18/71, C08G 18/76

(54) **Stabile Dispersion von anorganischen Nanopartikeln**
Stable dispersion of anorganic nanoparticles
Dispersion stable de nanoparticules anorganiques

(30) Priorität: 23.04.2008 DE 202008005669 U; 06.06.2008 DE 202008007626 U; 25.06.2008 DE 102008029858
(43) Veröffentlichungstag der Anmeldung: 28.10.2009
(73) Patentinhaber: BYK-Chemie GmbH, 46483 Wesel (DE)
(72) Erfinder: Reimann, Jörg, 46483 Wesel (DE); Nagel, Carsten, 48249 Dülmen (DE); Tecklenburg, Janin, 46119 Oberhausen (DE)
(74) Vertreter: Gesthuysen, von Rohr & Eggert

(56) Entgegenhaltungen:
- WO-A-2006/079098
- DE-A1- 10 004 487
- DE-A1- 10 039 837
- US-B1- 6 503 960
- BOFFA ET AL: "Preparation of templated mesoporous silica membranes on macroporous alpha-alumina supports via direct coating of thixotropic polymeric sols" MICROPOROUS AND MESOPOROUS MATERIALS, ELSEVIER SCIENCE PUBLISHING, NEW YORK, US, Bd. 100, Nr. 1-3, 7. Februar 2007 (2007-02-07), Seiten 173-182, XP005878673 ISSN: 1387-1811
- ZHANG ET AL: "Control of particle segregation during drying of ceramic suspension droplets" JOURNAL OF THE EUROPEAN CERAMIC SOCIETY, ELSEVIER SCIENCE PUBLISHERS, BARKING, ESSEX, GB, Bd. 27, Nr. 5, 22. Dezember 2006 (2006-12-22), Seiten 2229-2235, XP005812232 ISSN: 0955-2219

## Beschreibung

Die vorliegende Erfindung betrifft das Gebiet der Dispersionen von anorganischen Nanopartikeln.

Insbesondere betrifft die vorliegende Erfindung stabile Dispersionen von anorganischen Nanopartikeln sowie deren Verwendung und Herstellung und darüber hinaus diese Dispersionen enthaltende Systeme. Des weiteren betrifft die vorliegende Erfindung ein Verfahren zur Stabilisierung von Dispersionen anorganischer Nanopartikel.

Zur Verbesserung der mechanischen Eigenschaften von Beschichtungs- und Dispersionssystemen (so z. B. von Lacken, Farben wie Druckfarben, Beschichtungen etc.) und von Kunststoffen, insbesondere speziell zur Steigerung von deren Verschleißeigenschaften, wie Kratzfestigkeit oder dergleichen, ist die Inkorporierung von Additiven und Füllstoffen dem Fachmann grundsätzlich bekannt. Hier kommen zunehmend Dispersionen von anorganischen Nanopartikeln zum Einsatz. Einige dieser Nanopartikel (z. B. TiO₂ und/oder ZnO) werden auch eingesetzt, um die UV-Beständigkeit zu verbessern.

Ein mit herkömmlichen Dispersionen von anorganischen Nanopartikeln häufig verbundenes Problem ist die nicht ausreichende Lagerstabilität, insbesondere die Neigung zur Sedimentation. Dieses Phänomen kann schließlich dazu führen, daß nach längeren Lagerdauern die sedimentierten Nanopartikel agglomerieren oder miteinander verbacken und einen nicht mehr aufrührbaren und/oder auflösbaren, festen Rückstand bilden, so daß die Dispersionen schließlich überhaupt nicht mehr einsetzbar sind. Die Sedimentationsneigung wird durch die hohen Dichten der anorganischen Nanopartikel begünstigt. Anorganische Nanopartikel mit besonders hohen Dichten im Bereich von 5 g/cm³ bis 6 g/cm³ oder sogar mehr, wie z. B. anorganische Nanopartikel auf Basis von Zinkoxid, Antimon/Zinn-Oxiden (ATO), Indium/Zinn-Oxiden (ITO) oder dergleichen, zeigen eine besonders stark ausgeprägte Tendenz zur Sedimentationsbildung.

Daher ist es im Stand der Technik auch versucht worden, derartige Dispersionen von anorganischen Nanopartikeln durch Zusatz von speziellen Additiven, insbesondere Stabilisatoren, lagerfähig bzw. sedimentationsstabil zu machen. Ein entscheidender Nachteil der im Stand der Technik eingesetzten Additive bzw. Stabilisatoren ist jedoch die Tatsache, daß deren Inkorporierung zumeist mit einer nachteiligen Beeinträchtigung der Fließfähigkeitseigenschaften bzw. der rheologischen Eigenschaften der Dispersionen verbunden ist. Häufig kommt es nämlich zu einer unerwünschten Verfestigung der auf diese Weise stabilisierten Dispersionen. Bisweilen wird aber auch eine Synärese beobachtet, verbunden mit einer unerwünschten Phasentrennung infolge der Sedimentation. Derartige Systeme sind dann für die vorgenannten Anwendungen nicht mehr geeignet.

Die DE 100 04 487 A1 betrifft physikalisch, thermisch und/oder mit aktinischer Strahlung härtbare Zusammensetzungen, welche mindestens eine Harnstoff- und Urethangruppen aufweisende Verbindung enthalten.

Die wissenschaftliche Publikation V. Boffa, J.E. ten Elshof, D.H.A, Blank "Preparation of templated mesoporous silica membranes on macroporous α-alumina supports via direct coating of thixotropic polymeric sols", Microporous and Mesoporous Materials 100 (2007) 173-182, betrifft den Auftrag einer mesoporösen Silicaschicht auf einem makroporösen α-Aluminiumoxiduntergrund.

Weiterhin betrifft die wissenschaftliche Publikation Y. Zhang, L. Chen, S. Yang, J.R.G. Evans "Control of particle segregation during drying of ceramic suspension droplets", Journal of the European Ceramic Society 27 (2007) 2229-2235, das Entmischen von binären Systemen während der Trocknung keramischer Suspensionen.

Die US 6,503,960 B1 betrifft härtbare Zusammensetzungen, welche eine (meth)acrylfunktionalisierte härtbare Komponente, ein Härtersystem, eine Pigmentzusammensetzung und einen Stabilisator für Dispersionen aufweist.

Schließlich betrifft die WO 2006/079098 A1 Dispersionen von Nanopartikel/Polyurethan-Kompositen sowie ein Verfahren zu deren Herstellung, wobei die Nanopartikel und ein Polyurethanprepolymer in Abwesenheit von Wasser gemischt und das Gemisch anschließend in Wasser dispergiert werden.

Der vorliegenden Erfindung liegt daher die Aufgabe zugrunde, disperse Systeme der vorgenannten Art, insbesondere Dispersionen von anorganischen Nanopartikeln, bereitzustellen, welche sich insbesondere zum Einsatz in den vorgenannten Systemen eignen und die zuvor geschilderten Nachteile des Standes der Technik vermeiden oder aber wenigstens abschwächen.

Insbesondere liegt eine Aufgabe der vorliegenden Erfindung in der Bereitstellung stabiler bzw. stabilisierter disperser Systeme der vorgenannten Art, insbesondere von Dispersionen von anorganischen Nanopartikeln, welche auch über längere Zeiträume lagerstabil bzw. sedimentationsstabil sind, wobei jedoch die Fließfähigkeitseigenschaften bzw. die rheologischen Eigenschaften der resultierenden stabilisierten Dispersionen nach wie vor ohne weiteres einen Einsatz zu den vorgenannten Anwendungszwecken ermöglichen sollen (z. B. in Lacken, Farben, Beschichtungen, Kunststoffen etc.).

Zur Lösung der vorgenannten Aufgabe schlägt die vorliegende Erfindung - gemäß einem ersten Aspekt der vorliegenden Erfindung - eine stabile Dispersion von anorganischen Nanopartikeln nach Anspruch 1 vor; weitere, vorteilhafte Ausgestaltungen dieses Erfindungsaspektes sind Gegenstand der betreffenden Unteransprüche.

Weiterer Gegenstand der vorliegenden Erfindung - gemäß einem zweiten Aspekt der vorliegenden Erfindung - ist die erfindungsgemäße Verwendung der Dispersion nach der vorliegenden Erfindung gemäß Anspruch 12; weitere, vorteilhafte Ausgestaltungen dieses Erfindungsaspektes sind Gegenstand des betreffenden Unteranspruchs.

Wiederum weiterer Gegenstand der vorliegenden Erfindung - gemäß einem dritten Aspekt der vorliegenden Erfindung - sind erfindungsgemäße Beschichtungsstoffe und Beschichtungssysteme, insbesondere Lacke, Farben und dergleichen, Kunststoffe, Schaumstoffe, Kosmetika, insbesondere Nagellacke, Klebstoffe und Dichtungsmassen gemäß Anspruch 14, welche die Dispersion nach der vorliegenden Erfindung enthalten.

Schließlich ist ein weiterer Gegenstand der vorliegenden Erfindung - gemäß einem vierten Aspekt der vorliegenden Erfindung - ein Verfahren zur Stabilisierung einer Dispersion von anorganischen Nanopartikeln gemäß Anspruch 15.

Es versteht sich von selbst, daß im nachfolgenden solche Ausführungsforinen und Schilderungen, welche nur zu einem einzelnen Aspekt der vorliegenden Erfindung gemacht sind, gleichermaßen entsprechend auch für die anderen Aspekte der vorliegenden Erfindung gelten, ohne daß dies einer ausdrücklichen Erwähnung bedarf.

Bei allen nachstehend genannten relativen bzw. prozentualen gewichtsbezogenen Mengenangaben ist zu beachten, daß diese im Rahmen der erfindungsgemäßen Dispersion vom Fachmann derart auszuwählen sind, daß sie sich in der Summe unter Einbeziehung sämtlicher Inhaltsstoffe, hierunter auch Zusatzstoffe, weiterer Bestandteile bzw. Additive, Dispersionsmittel etc., insbesondere wie nachfolgend definiert, stets zu 100 Gew.-% ergänzen. Dies versteht sich für den Fachmann aber von selbst.

Beachtlich ist zudem, daß sich alle nachfolgenden Angaben hinsichtlich der mittleren Molmasse bzw. des mittleren Molekulargewichts auf die sogenannte gewichtsmittlere Molmasse bzw. das gewichtsmittlere Molekulargewicht beziehen.

Die Anmelderin hat überraschenderweise herausgefunden, daß sich das zuvor geschilderte Problem dadurch lösen läßt, daß man den betreffenden Dispersionen von anorganischen Nanopartikeln mindestens einen Stabilisator auf Basis einer Mischung und/oder Kombination eines modifizierten Polyurethans und eines modifizierten Harnstoffs zusetzt.

Gegenstand der vorliegenden Erfindung - gemäß einem **ersten** erfindungsgemäßen Aspekt - ist somit eine stabile Dispersion von anorganischen Nanopartikeln, welche anorganische Nanopartikel in einem Dispersionsmittel enthält, wobei der Dispersion eine Kombination von
(i) modifiziertem Polyurethan und
(ii) modifiziertem Harnstoff
   zugesetzt ist,
   - wobei das modifizierte Polyurethan (i)
      der allgemeinen Formel (I) 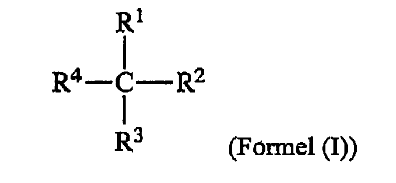 wobei in der Formel (I) die Reste R₁ R₂, R₃ und R₄, jeweils unabhängig voneinander, einen Rest der folgenden allgemeinen Formel 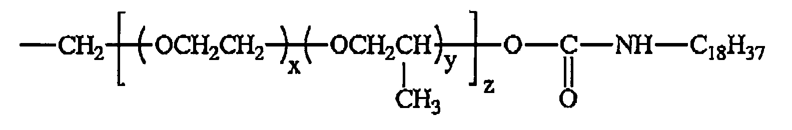 darstellen, wobei in der vorbezeichneten Formel x = 4 ist, y = 1 ist und z = 5 bis 25 ist;
      entspricht; und
   - wobei der modifizierte Harnstoff (ii)
      der allgemeinen Formel (II) 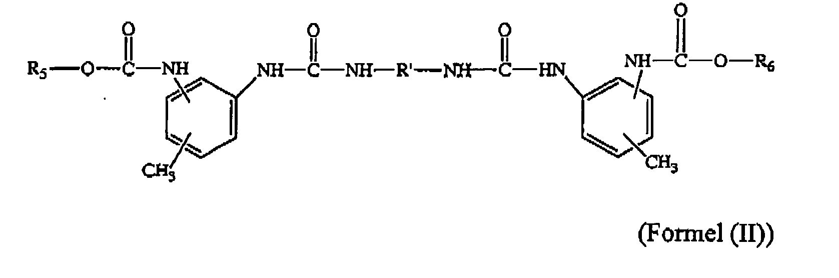
   wobei in der Formel (II)
   R' einen der folgenden Reste bezeichnet:

      -CₚH₂ₚ- mit p = 2 bis 12;

      -(C_{q}H_{2q}-O-C_{q}H_{2q})ᵣ- mit q = 2 bis 4 und = 1 bis 10;

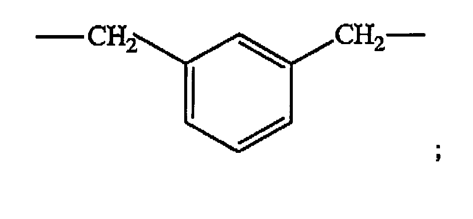

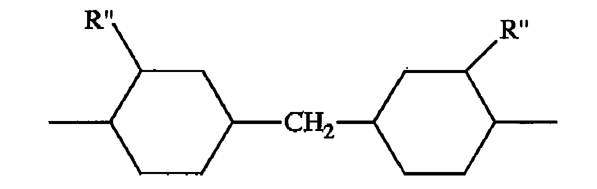

      mit R"= H oder CH₃; 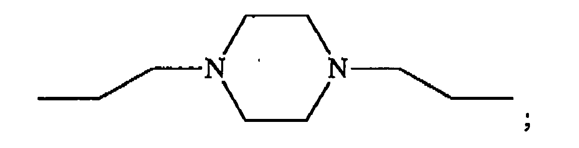
   • R₅ und R₆, jeweils unabhängig voneinander, einen der folgenden Reste darstellen:
      einen n-Alkylrest oder einen iso-Alkylrest mit 4 bis 22 C-Atomen;
      einen Alkenylrest mit 3 bis 18 C-Atomen;
      einen Cycloalkylrest;
      einen Aralkylrest;
      einen Rest der Formel CₘH₂ₘ₊₁(O-CₙH₂ₙ))ₓ-, wobei m =1 bis 22 ist, n = 2 bis 4 ist und x = 1 bis 15 ist;
      einen Rest der Formel CₘH₂ₘ₊₁(OOC-CᵥH₂ᵥ)ₓ-, wobei m = 1 bis 22 ist, n = 2 bis 4 ist, x = 1 bis 15 ist und v = 4 oder 5;
      einen Rest der Formel Z-C₆H₄(O-CₙH₂ₙ)ₓ-, wobei n = 2 bis 4 ist,
      x = 1 bis 15 ist und Z einen Alkylrest mit 1 bis 12 C-Atomen bezeichnet,
      oder aber der allgemeinen Formel (II') 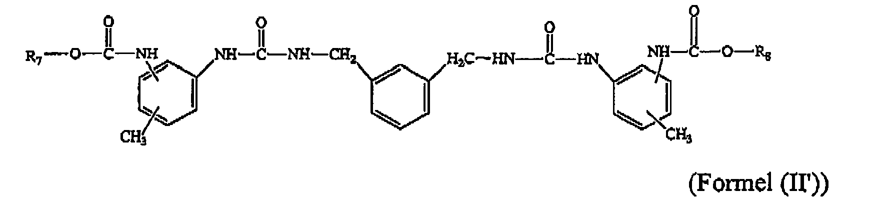 wobei in der Formel (II')
      R₇ und R₈, jeweils unabhängig voneinander, einen der folgenden Reste 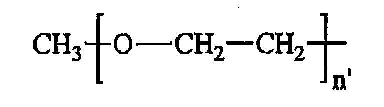 mit n' = 7 bis 16 oder 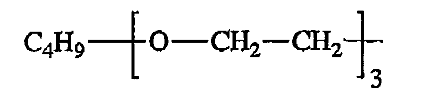
darstellen,
entspricht.

Eine Besonderheit der vorliegenden Erfindung ist somit insbesondere darin zu sehen, daß erfindungsgemäß eine Dispersion von anorganischen Nanopartikeln bereitgestellt wird, welche durch die gezielte Zugabe einer Kombination von Stabilisatoren auf Basis von modifizierten Polyurethanen und modifizierten Harnstoffen stabilisiert und somit lagerbeständig ist. In diesem Zusammenhang hat die Anmelderin in völlig überraschender Weise herausgefunden, daß durch den Einsatz derartiger Stabilisatoren eine außerordentlich lagerstabile Dispersion von anorganischen Nanopartikeln bereitgestellt werden kann, welche auch - wie in den nachfolgenden Ausführungsbeispielen noch ausführlich dargelegt - nicht bzw. in nicht nennenswerter Weise zu einem vorzeitigen Sedimentieren der Nanopartikel neigt und somit auch nach längeren Lagerungszeiträumen noch ohne weiteres einsetzbar ist.

Dabei zeichnet sich die erfindungsgemäße Dispersion dadurch aus, daß die eingesetzten Stabilisatoren die rheologischen Eigenschaften bzw. die Fließfähigkeit bzw. die Viskosität der erfindungsgemäßen Dispersion nicht vor dem Hintergrund ihrer Anwendbarkeit negativ beeinflussen. In diesem Zusammenhang weist die erfindungsgemäße Zusammensetzung somit - neben ihrer hervorragenden Lagerstabilität bzw. Sedimentationsstabilität - hervorragende Anwendungseigenschaften auf Basis ihrer guten rheologischen Eigenschaften auf, so daß sie ohne weiteres in die noch nachfolgend beschriebenen Systeme, beispielsweise Lacke, Farben oder dergleichen, Kunststoffe, Kosmetika oder dergleichen, inkorporiert werden kann, wobei zudem ein gleichmäßiges Einarbeiten der erfindungsgemäßen Dispersion in die damit auszurüstende Zusammensetzung gewährleistet ist. Auf diese Weise können die mit der erfindungsgemäßen Dispersion ausgerüsteten Zusammensetzungen bzw. Systeme mit verbesserten mechanischen Eigenschaften, wie Kratzfestigkeit oder dergleichen, und/oder einer verbesserten Beständigkeit, insbesondere UV-Beständigkeit, ausgestattet werden.

Bei den erfindungsgemäß eingesetzten Stabilisatoren als solchen handelt es sich um kommerziell verfügbare Produkte (z. B. BYK-Chemie, Deutschland), deren Herstellung dem Fachmann zudem per se bekannt ist.

Durch den gezielten Einsatz spezieller Stabilisatoren auf Basis modifizierter Polyurethane bzw. modifizierter Harnstoffe können sogar die hinsichtlich ihres Sedimentationsverhaltens äußerst problematischen Nanopartikel mit besonders hoher Dichte, wie beispielsweise Zinkoxid oder dergleichen, effektiv und langzeitstabil dispergiert werden, so daß auch für derart problematische Nanopartikel lagerstabile disperse Systeme bereitgestellt werden können.

Ohne sich auf diese Theorie beschränken zu wollen, kann die Wirkweise der erfindungsgemäß eingesetzten Stabilisatoren auf Basis von modifizierten Polyurethanen und modifizierten Harnstoffen derart verstanden werden, daß die vorgenannten Stabilisatoren gewissermaßen eine Matrix bzw. ein Netzwerk in der erfindungsgemäßen Dispersion ausbilden, in welcher dann die Nanopartikel gewissermaßen eingelagert werden, so daß diese nicht vorzeitig sedimentieren. Dabei hat die Anmelderin völlig überraschend herausgefunden, daß trotz der Ausbildung der zuvor beschriebenen matrix- bzw. netzwerkartigen Struktur durch die Stabilisatoren die rheologischen Eigenschaften bzw. die Fließeigenschaften der erfmdungsgemäßen Dispersion nicht im Hinblick auf ihre Anwendung bzw. Einarbeitbarkeit in die zuvor beschriebenen Systeme beeinträchtigt ist.

Die im Rahmen der Dispersion nach der Erfindung erfindungsgemäß eingesetzten Stabilisatoren führen - mit anderen Worten - somit zu hervorragenden absetzverhindernden, Eigenschaften der dispergierten anorganischen Nanopartikel in der erfindungsgemäßen Dispersion bei gleichzeitig niedriger bzw. im Hinblick auf die bestimmungsgemäße Verwendung der erfindungsgemäßen Dispersion optimierter Viskosität der Dispersion nach der Erfindung als solcher. Die erfindungsgemäß eingesetzten Stabilisatoren führen somit zu einer signifikanten Verbesserung des Standvermögens und des Absetzverhaltens der erfindungsgemäßen Dispersion und erhöhen somit deren Topfkonsistenz maßgeblich. Dabei liegen die erfindungsgemäß eingesetzten Stabilisatoren insbesondere in flüssiger Form vor und sind daher leicht zu handhaben. Die Stabilisatoren sind zudem zumindest im wesentlichen frei von flüchtigen organischen Verbindungen (sogenannten VOCs bzw. *Volatile Organic Compound(s)).* Zudem sind die eingesetzten Stabilisatoren zumindest im wesentlichen frei von aufgrund ihrer ungenügenden Umweltverträglichkeit problematischen Alkylphenolethoxylaten (APEO).

Gleichermaßen zeichnen sich die erfindungsgemäß verwendeten Stabilisatoren durch eine zumindest im wesentlichen vom pH-Wert unabhängige Wirksamkeit aus. Die Stabilisatoren benötigen somit keine Kontrolle des pH-Wertes. Zudem ist eine Temperaturkontrolle in bezug auf die erfindungsgemäßen Stabilisatoren nicht erforderlich. Die erfindungsgemäß eingesetzten Stabilisatoren zeichnen sich zudem dadurch aus, daß diese einen sofortigen Effekt bei der Herstellung der erfindungsgemäßen Dispersion bzw. bei der Einarbeitung in die erfindungsgemäß Dispersion hinsichtlich der Sedimentationsstabilisierung der Dispersion induzieren, so daß eine sogenannte "Reifezeit" nicht erforderlich ist. Aufgrund der starken Wirksamkeit der erfindungsgemäß eingesetzten Stabilisatoren erfordern diese im allgemeinen eine nur niedrige Dosierung in bezug auf die erfmdungsgemäße Dispersion. Bei der bestimmungsgemäßen Verwendung der erfindungsgemäßen Dispersion beeinträchtigen die im Rahmen der vorliegenden Erfindung verwendeten Stabilisatoren im Vergleich zu anderen Stabilisatoren des Standes der Technik, wie natürlichen oder synthetischen Silikaten, Acrylatverdickem, pyrogener Kieselsäure etc., nicht die Wasserbeständigkeit der zuvor beschriebenen Zusammensetzungen bzw. Systeme, wie beispielsweise Lacken, in welche die erfindungsgemäße Dispersion eingearbeitet ist. Zudem führen die erfindungsgemäß verwendeten Stabilisatoren nicht zu einer Beeinflussung des Glanzes der zuvor beschriebenen Zusammensetzungen bzw. Systeme, wie Lakken, in welche die erfindungsgemäße Dispersion eingearbeitet ist.

Die erfindungsgemäßen Dispersionen vereinen im Ergebnis somit die positiven Eigenschaften einer ausgezeichneten Standfestigkeit aufgrund eines verbesserten Sedimentationsverhaltens der in der Dispersion nach der Erfindung dispergierten Nanopartikel einerseits mit einer - bei ihrer entsprechenden Inkorporierung bzw. Zugabe - signifikanten Verbesserung der mechanischen Eigenschaften bzw. der Beständigkeit von Zusammensetzungen bzw. Systemen der vorgenannten Art andererseits, wobei insbesondere neben der Verschleißbeständigkeit, insbesondere der Kratzfestigkeit, auch die UV-Beständigkeit der erhaltenen Produkte bei gleichzeitig gutem Glanz verbessert ist.

Was die erfindungsgemäße Dispersion anbelangt, so hat es sich im Rahmen der vorliegenden Erfindung als besonders vorteilhaft herausgestellt, wenn (i) das modifizierte Polyurethan in Mengen von 0,002 bis 5 Gew.-%, insbesondere 0,005 bis 2 Gew.-%, vorzugsweise 0,01 bis 1 Gew.-%, besonders bevorzugt 0,05 bis 0,75 Gew.-%, ganz besonders bevorzugt 0,1 bis 0,5 Gew.-%, bezogen auf die Dispersion, zugesetzt ist. Wie zuvor angeführt, kann einzelfallbedingt bzw. anwendungsbezogen von den vorgenannten Mengen abgewichen werden, ohne daß der Bereich der vorliegenden Erfindung verlassen wird.

Was die Menge an in der erfindungsgemäßen Dispersion enthaltenen (ii) modifizierten Harnstoffen anbelangt, so kann diese in weiten Bereichen variieren. Im allgemeinen sollte (ii) der modifizierte Harnstoff in Mengen von 0,001 bis 2 Gew.-%, insbesondere 0,002, bis 1,5 Gew.-%, bevorzugt 0,01 bis 1 Gew.-%, besonders bevorzugt 0,05 bis 0,3 Gew.-%, bezogen auf die Dispersion, zugesetzt sein.

Die erfindungsgemäße Dispersion weist als Stabilisator eine Kombination von (i) modifiziertem Polyurethan und (ii) modifiziertem Harnstoff auf. Denn die Anmelderin hat in diesem Zusammenhang völlig überraschend gefunden, daß durch die gezielte Zugabe sowohl von (i) modifiziertem Polyurethan einerseits und (ii) modifiziertem Harnstoff andererseits besonders gute Effekte hinsichtlich der Stabilisierung der in der erfindungsgemäßen Dispersion dispergierten anorganischen Nanopartikel und damit eine besonders gute Standfestigkeit der erfindungsgemäßen Dispersion als solche resultieren. In diesem Zusammenhang hat es sich hinsichtlich der Stabilisierung der erfindungsgemäßen Dispersionen als vorteilhaft erwiesen, wenn (i) das modifizierte Polyurethan einerseits und (ii) der modifizierte Harnstoff andererseits in der erfindungsgemäßen Dispersion in bestimmten gewichtsbezogenen Mengenverhältnissen vorliegen. So konnte die Anmelderin zeigen, daß besonders gute Ergebnisse hinsichtlich der Stabilisierung der erfindungsgemäßen Dispersion erhalten werden, wenn die Kombination von (i) modifizierten Polyurethanen und (ii) modifizierten Harnstoffen in einem gewichtsbezogenen Mengenverhältnis von (i) zu (ii) von ≥ 1 : 1, insbesondere ≥ 2 : 1, bevorzugt ≥ 3 : 1, zugesetzt ist, insbesondere wenn die Kombination in einem gewichtsbezogenen Mengenverhältnis von (i) zu (ii) im Bereich von 10 : 1 bis 1 : 1, insbesondere 7 : 1 bis 1,5 : 1, vorzugsweise 6 : 1 bis 2 : 1, besonders bevorzugt 5 : 1 bis 3 : 1, zugesetzt ist. Gemäß einer erfindungsgemäß besonders bevorzugten Ausführungsform ist die Kombination von (i) und (ii) in einem gewichtsbezogenen Mengenverhältnis von (i) zu (ii) von etwa 4 : 1 zugesetzt.

Ohne sich auf diese Theorie beschränken zu wollen, führt die spezielle binäre Kombination der zuvor beschriebenen Stabilisatoren (i) und (ii) zu einer hinsichtlich der Stabilisierung weiter optimierten Ausbildung des Netzwerkes bzw. der Matrixstruktur in der Dispersion, welche durch die gezielte Auswahl des gewichtsbezogenen Mengenverhältnisses von (i) zu (ii) noch weiter optimiert werden kann, so daß hierdurch insgesamt eine weiter verbesserte Lagerstabilität der erfindungsgemäßen Dispersion ermöglicht wird, was auf das synergistische Zusammenwirken der beiden Stabilisatoren (i) und (ii) zurückzuführen ist.

Was die Gesamtmenge der Kombination von (i) modifiziertem Polyurethan und (ii) modifiziertem Harnstoff in der erfindungsgemäßen Dispersion anbelangt, so kann die Dispersion die Kombination von (i) modifiziertem Polyurethan und (ii) modifiziertem Harnstoff in einer Gesamtmenge von 0,003 bis 7 Gew.-%, insbesondere 0,005 bis 5 Gew.-%, vorzugsweise 0,01 bis 3 Gew.-%, besonders bevorzugt 0,1 bis 2 Gew.-%, bezogen auf die Dispersion, enthalten.

Bevorzugt weisen (i) das modifizierte Polyurethan und (ii) der modifizierte Harnstoff voneinander verschiedene mittlere Molekulargewichte auf. In diesem Zusammenhang hat es sich als besonders vorteilhaft erwiesen, wenn das Verhältnis des mittleren Molekulargewichtes (i) des modifizierten Polyurethans zu dem mittleren Molekulargewicht (ii) des modifizierten Harnstoffs mindestens 5, insbesondere mindestens 7,5, vorzugsweise mindestens 10, beträgt, insbesondere wenn das Verhältnis des mittleren Molekulargewichtes (i) des modifizierten Polyurethans zu dem mittleren Molekulargewicht (ii) des modifizierten Harnstoffs im Bereich von 2 bis 50, insbesondere 5 bis 40, vorzugsweise 7,5 bis 30, beträgt. Hierdurch können die Sedimentationseigenschaften der erfindungsgemäßen Dispersion bzw. deren Langzeitstabilität noch weiter verbessert werden.

Das (i) modifizierte Polyurethan sollte vorzugsweise ein mittleres Molekulargewicht im Bereich von 5.000 bis 25.000 Da, insbesondere 7.000 bis 20.000 Da, vorzugsweise 9.000 bis 18.000 Da, bevorzugt 10.000 bis 16.000 Da, ganz besonders bevorzugt 12.000 bis 15.000 Da, aufweisen.

Die Anmelderin hat nun überraschenderweise herausgefunden, daß mit der erfindungsgemäßen Dispersion besonders gute Ergebnisse erhalten werden, wobei in der erfindungsgemäßen Dispersion in bezug auf das (i) modifizierte Polyurethan die nachfolgenden Verbindungen der allgemeinen Formel (I) 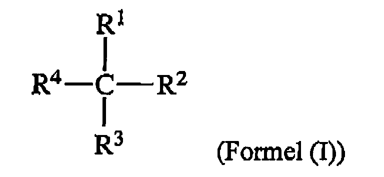 eingesetzt werden, wobei in der Formel (I) die Reste R₁, R₂, R₃ und R₄, jeweils unabhängig voneinander, einen Rest der folgenden allgemeinen Formel 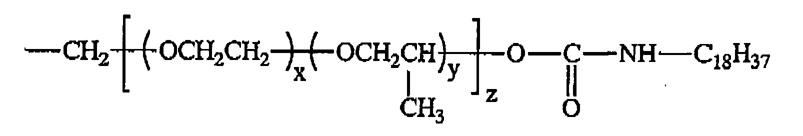 darstellen, wobei in der vorbezeichneten Formel x = 4 ist, y =1 ist und z = 5 bis 25 ist. In der erfindungsgemäßen Dispersion können auch Mischungen und/oder Kombinationen verschiedener Verbindungen gemäß der vorgenannten Formel (I) eingesetzt werden. Was die vorstehende Formel (I') anbelangt, so werden in bezug auf die Variablen x, y und z bevorzugt ganze Zahlen aus dem spezifizierten Wertebereich eingesetzt.

Für weitergehende Ausführungen zu den erfindungsgemäß eingesetzten modifizierten Polyurethanen (i) sowie deren Herstellung kann verwiesen werden auf die US 4 079 028 A. Die modifizierten Polyurethane der vorstehenden allgemeinen Formel (I) lassen sich beispielsweise entsprechend den Ausführungsbeispielen, insbesondere gemäß dem Ausführungsbeispiel 103, der US 4 079 028 A herstellen.

Auch das mittlere Molekulargewicht des als Stabilisator im Rahmen der erfindungsgemäßen Dispersion verwendbaren (ii) modifizierten Harnstoffs spielt hinsichtlich der gezielten Steigerung der Lagerstabilität bzw. Verbesserung der Sedimentationseigenschaften der erfindungsgemäßen Dispersion eine gewisse Rolle. So hat es sich im Rahmen der vorliegenden Erfindung als besonders vorteilhaft erwiesen, wenn der (ii) modifizierte Harnstoff ein mittleres Molekulargewicht im Bereich von 500 bis 3.000 Da, insbesondere 750 bis 2.500 Da, vorzugsweise 1.000 bis 2.000 Da, bevorzugt 1.250 bis 1.750 Da, ganz besonders bevorzugt 1.500 bis 1.600 Da, aufweist.

Erfindungsgemäß werden besonders gute Ergebnisse hinsichtlich der Lagereigenschaften der erfindungsgemäßen Dispersion erzielt, wenn (ii) der modifizierte Harnstoff den nachfolgend spezifizierten Verbindungen der allgemeinen Formel (II) 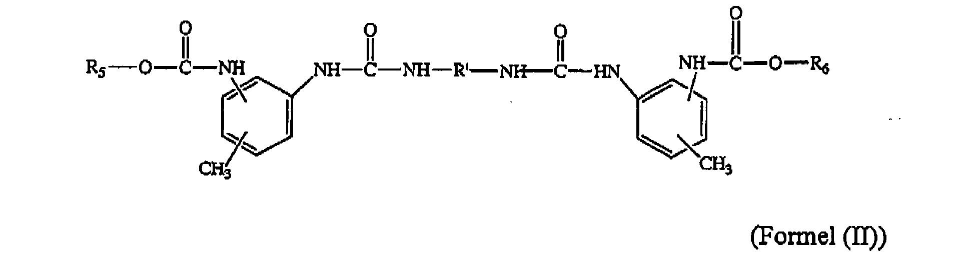 entspricht,
wobei in der Formel (II)
- R' einen der folgenden Reste bezeichnet:
   -CₚH₂ₚ- mit p = 2 bis 12;
   -(C_{q}H_{2q}-O-C_{q}H_{2q})ᵣ- mit q = 2 bis 4 und r = 1 bis 10; 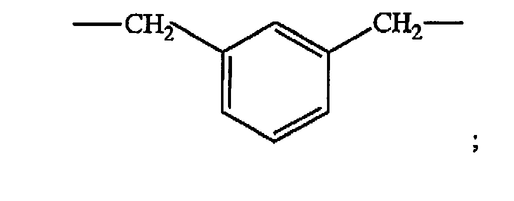 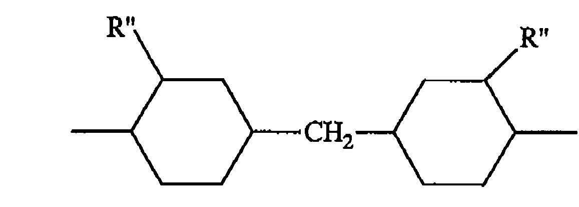 mit R"= H oder CH₃; 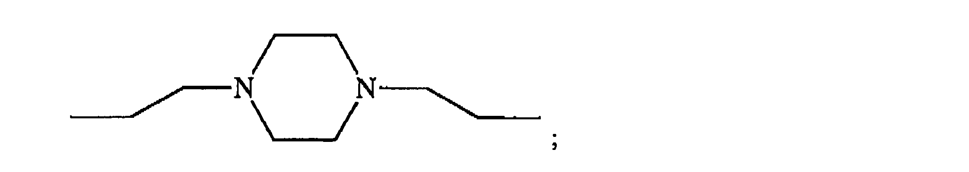
- R₅ und R₆, jeweils unabhängig voneinander, einen der folgenden Reste darstellen;
   einen n-Alkylrest oder einen iso-Alkylrest mit 4 bis 22 C-Atomen;
   einen Alkenylrest mit 3 bis 18 C-Atomen;
   einen Cycloalkylrest;
   einen Aralkylrest;
   einen Rest der Formel CₘH2ₘ₊₁(O-CₙH₂ₙ)ₓ-, wobei m = 1 bis 22 ist, n = 2 bis 4 ist und x = 1 bis 15 ist;
   einen Rest der Formel CₘH₂ₘ₊₁(OOC-CᵥH₂ᵥ)ₓ-, wobei m = 1 bis 22 ist, n = 2 bis 4 ist, x = 1 bis 15 ist und v = 4 oder 5;
   einen Rest der Formel Z-C₆H₄(O-CₙH₂ₙ)ₓ-, wobei n = 2 bis 4 ist, x = 1 bis 15 ist und Z einen Alkylrest mit 1 bis 12 C-Atomen bezeichnet.

Erfindungsgemäß werden gleichfalls besonders gute Ergebnisse erhalten, wenn die erfindungsgemäße Dispersion derart ausgestaltet ist, daß (ii) der modifizierte Harnstoff der allgemeinen Formel (II') 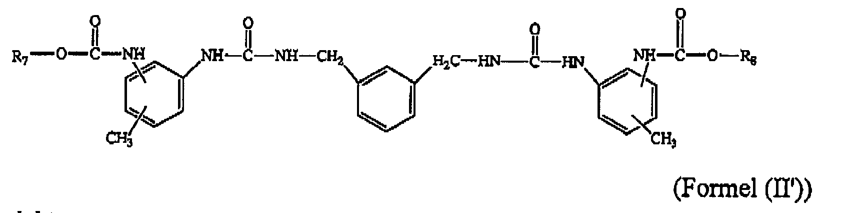 entspricht,
wobei in der Formel (II')
R₇ und R₈, jeweils unabhängig voneinander, einen der folgenden Reste darstellen: 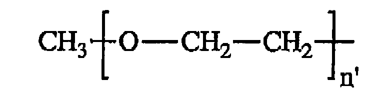 mit n' = 7 bis 16 oder

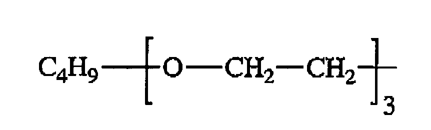

Für weitergehende Ausführungen zu den erfindungsgemäß eingesetzten modifizierten Harnstoffen (ii) der vorstehenden allgemeinen Formeln (II) bzw. (II'), sowie deren Herstellung kann insbesondere verwiesen werden auf das auf die Anmelderin selbst zurückgehende deutsche Patent DE 100 39 837 C2 sowie auf die parallelen US-Dokumente US 6 617 468 B2 und US 20021115882 A1.

Was die vorstehenden Formeln (II) und (II') anbelangt, so werden in bezug auf die dort genannten Variablen p, q, r, m, n, v, x und n' bevorzugt jeweils ganze Zahlen aus den zuvor spezifizierten Wertebereichen eingesetzt werden.

Wie zuvor angeführt, spielt die Viskosität der erfindungsgemäßen Dispersion eine entscheidende Rolle einerseits hinsichtlich der Erhöhung der Lagerstabilität und andererseits hinsichtlich der guten Verarbeitbarkeit bzw. Inkorporierung in damit auszurüstende Zusammensetzungen bzw. Systeme, wie Lacken oder dergleichen. In diesem Zusammenhang sollte die Dispersion eine dynamische Brookfield-Viskosität gemäß ASTM D 2196 bei 5 U/min und 23 °C von höchstens 25.000 mPa·s, insbesondere höchstens 20.000 mPa·s, aufweisen. Diesbezüglich wird auch von dem sogenannten niedrigen Scherbereich gesprochen, wobei die Erfassung der zuvor genannten Viskositätswerte unter Verwendung einer Spindel vom Typ 4 (Spindel 4) erfolgt. Dies gilt auch für alle nachfolgenden Viskositätsangaben.

Insbesondere sollte die erfindungsgemäße Dispersion eine dynamische Brookfield-Viskosität gemäß ASTM D 2196 bei 5 U/min und 23 °C im Bereich von 1.000 bis 25.000 mPa·s, insbesondere 1.250 bis 20.000 mPa·s, vorzugsweise 1.500 bis 15.000 mPa·s, bevorzugt 2.000 bis 10.000 mPa·s, aufweisen.

Neben den zuvor spezifizierten Viskositätswerten im Rahmen des sogenannten niedrigen Scherbereiches spielen auch die Viskositätswerte im höheren bzw. hohen Scherbereich eine entscheidende Rolle: So sollte die Dispersion eine dynamische Brookfield-Viskosität gemäß ASTM D 2196 bei 50 U/min und 23 °C von höchstens 7.000 mPa·s, insbesondere höchstens 5.000 mPa·s, aufweisen. In diesem Zusammenhang sollte die erfindungsgemäße Dispersion insbesondere eine dynamische Brookfield-Viskosität gemäß ASTM D 2196 bei 50 U/min und 23 °C im Bereich von 500 bis 7.000 mPa·s, insbesondere 750 bis 6.000 mPa·s, vorzugsweise 900 bis 5.000 mPa·s, bevorzugt 1.000 bis 4.000 mPa·s, aufweisen.

Wie zuvor beschrieben, enthält die erfindungsgemäße Dispersion anorganische Nanopartikel. Was die in der erfindungsgemäßen Dispersion enthaltenen anorganischen Nanopartikel anbelangt, so kann deren Teilchengröße in weiten Bereichen variieren. Im allgemeinen weisen die anorganischen Nanopartikel Teilchengrößen im Bereich von 0,5 bis 2.000 nm, insbesondere 1 bis 1.000 nm, vorzugsweise 2 bis 750 nm, bevorzugt 2 bis 500 nm, besonders bevorzugt 5 bis 300 nm, ganz besonders bevorzugt 5 bis 100 nm, auf. Die Bestimmung der Teilchengrößen kann beispielsweise mittels Transmissionselektronenmikroskopie, Lichtbeugungsmethoden oder dergleichen erfolgen.

Aufgrund des erfindungsgemäßen Konzeptes unter Einsatz spezieller Stabilisatoren der zuvor beschriebenen Art können erfindungsgemäß stabile Dispersionen bereitgestellt werden, welche auch bei Inkorporierung anorganischer Nanopartikel mit hoher Dichte lagerstabil sind. Diesbezüglich kann die Dichte der anorganischen Nanopartikel mindestens 2 g/cm³, insbesondere mindestens 3 g/cm³, vorzugsweise mindestens 4 g/cm³, besonders bevorzugt mindestens 5 g/cm³, ganz besonders bevorzugt mindestens 6 g/cm³, betragen.

Insbesondere können die anorganischen Nanopartikel aus mindestens einem gegebenenfalls dotierten Oxid, Hydroxid, Oxidhydroxid, Sulfat, Phosphat, Sulfid, Carbonat, Nitrid, Silikat, Carbid, Vanadat, Molybdat, Wolframat und/oder Halogenid, insbesondere Fluorid, mindestens eines Metalls oder Halbmetalls oder aber aus einem Metall/Element oder aber aus Mischungen oder Kombinationen solcher Verbindungen, vorzugsweise aus mindestens einem anorganischen Oxid, Hydroxid oder Oxidhydroxid, besonders bevorzugt einem anorganischen Oxid, gebildet sein oder diese Verbindung(en) enthalten.

Vorzugsweise können die anorganischen Nanopartikel aus mindestens einem gegebenenfalls dotierten Oxid, Hydroxid und/oder Oxidhydroxid, vorzugsweise Oxid, des Aluminiums, Siliziums, Zinks, Titans, Cers, Indiums, Antimons, Zinns und/oder Eisens, einem Erdalkalisulfat, einem Erdalkali- oder Lanthanphosphat, einem Cadmium- oder Zinksulfid, einem Erdalkalicarbonat, einem Aluminium- oder Siliciumnitrid, einem Erdalkalisilkat, einem Siliciumcarbid oder Silber oder aber aus Mischungen oder Kombinationen solcher Verbindungen gebildet sein oder diese Verbindung(en) enthalten.

Besonders bevorzugt hinsichtlich der erfindungsgemäßen Dispersion ist es, wenn die anorganischen Nanopartikel aus mindestens einem gegebenenfalls dotierten Oxid, Hydroxid und/oder Oxidhydroxid, vorzugsweise Oxid, des Aluminiums, Siliziums, Zinks, Titans, Cers, Indiums, Antimons, Zinns und/oder Eisens gebildet sind oder diese Verbindung(en) enthalten.

Insbesondere kann es im Rahmen der vorliegenden Erfindung vorgesehen sein, daß die anorganischen Nanopartikel auf Basis von Zinkoxid, Indium/Zinn-Oxiden (ITO) oder Antimon/Zinn-Oxiden (ATO) ausgebildet sind bzw. daß die anorganischen Nanopartikel Zinkoxidpartikel, indium/zinn-oxidische Partikel (ITO-Partikel) oder antimon/zinn-oxidische Partikel sind.

Gemäß einer besonderen Ausführungsform kann es vorgesehen sein, daß die anorganischen Nanopartikel oberflächenmodifiziert, insbesondere mittels Polysiloxangruppen oberflächenmodifiziert, ausgebildet sind. Eine derartige Oberflächenmodifizierung kann beispielsweise mittels Polysiloxangruppen erfolgen, d. h. an bzw. auf der Oberfläche der Nanopartikel sind bei dieser Ausführungsform Polysiloxangruppen aufgebracht, vorzugsweise mittels physikalischer und/oder chemischer, insbesondere chemischer kovalenter Bindung.

Die entsprechende Oberflächenmodifizierung mittels Polysiloxangruppen bewirkt eine noch weitergehende Steigerung bzw. Verbesserung der Anwendungseigenschaften der erfindungsgemäßen Dispersionen, insbesondere wenn sie in Beschichtungsstoffe und Beschichtungssysteme eingearbeitet werden. Insbesondere führt die Oberflächenmodifizierung, vorzugsweise mit Polysiloxangruppen, zu einer verringerten Sedimentations- und Gelbildungsneigung der erfindungsgemäßen Dispersionen. Auch wird einer Versprödung des abgetrockneten bzw. ausgehärteten Beschichtungssystems effizient entgegengewirkt. Die Oberflächenmodifizierung hat weiterhin den Vorteil, daß bei Einarbeitung in Beschichtungssysteme die Wechselwirkung mit dem Bindemittel vorteilhaft beeinflußt wird und auf diese Weise Transparenz und Brechungsindex gegenüber nicht oberflächenmodifizierten Partikeln noch weiter verbessert werden, insbesondere infolge des verringerten Brechungsindexunterschiedes eine deutlich geringere Lichtstreuung eintritt.

Die Oberflächenmodifizierung, insbesondere mittels Polysiloxangruppen, ist dem Fachmann grundsätzlich aus dem Stand der Technik bekannt. Diesbezüglich kann auf die auf die Anmelderin selbst zurückgehenden Patentanmeldungen DE 10 2005 006 870 A1 bzw. EP 1 690 902 A2 und DE 10 2007 030 285 A1 bzw. PCT/EP 2007/006273 verwiesen werden. Alle vorgenannten Druckschriften betreffen die Oberflächenmodifizierung von metall- oder halbmetalloxidischen oder hydroxidischen Oberflächen mittels Polysiloxanen, vorteilhafterweise durch Ausbildung chemischer, insbesondere kovalenter Bindungen.

Grundsätzlich kann die erfindungsgemäße Dispersion wäßrig basiert ausgebildet sein bzw. als Dispersionsmittel Wasser enthalten.

Daneben besteht grundsätzlich aber auch die Möglichkeit, daß die erfindungsgemäße Dispersion organisch basiert ausgebildet sein kann bzw. als Dispersionsznittel mindestens ein organisches Lösemittel enthält.

In diesem Zusammenhang kann die Menge des Dispersionsmittels in der erfindungsgemäßen Dispersion in weiten Bereichen variieren. Besonders vorteilhaft ist es jedoch, wenn die erfindungsgemäße Dispersion das Dispersionsmittel, insbesondere Wasser, in Mengen von 2 bis 90 Gew.-%, insbesondere 5 bis 80 Gew.-%, vorzugsweise 10 bis 70 Gew.-%, bevorzugt 20 bis 60 Gew.-%, bezogen auf das Dispersionsmittel, enthält.

Darüber hinaus können die Dispersionen nach der vorliegenden Erfindung außerdem mindestens einen weiteren Inhaltsstoff und/oder mindestens ein Additiv enthalten, welcher bzw. welches insbesondere ausgewählt sein kann aus der Gruppe von Konservierungsmitteln, Emulgatoren, Entschäumern, Netzmitteln, Dispergiermitteln, Antioxidationsmitteln, Stabilisatoren, Neutralisationsmitteln, Rheologiestellmitteln, organischen Lösemitteln, Lösungsvermittlern und Bioziden sowie deren Mischungen. Die vorgenannten Inhaltsstoffe bzw. Additive sind dem Fachmann als solche wohlbekannt.

Was das Konservierungsmittel anbelangt, so kann es im Rahmen der vorliegenden Erfindung vorgesehen sein, daß die Dispersion nach der Erfindung ein Konservierungsmittel, insbesondere ein Biozid, vorzugsweise ein Mikrobiozid, bevorzugt auf Basis mindestens eines Isothiazols, enthält, wobei die Dispersion das Konservierungsmittel insbesondere in Mengen von 0,001 bis 3 Gew.-%, insbesondere 0,01 bis 1 Gew.-%, bevorzugt 0,1 bis 0,6 Gew.-%, bezogen auf die Dispersion, enthalten kann. Hierdurch kann auf wirksame Art und Weise verhindert werden, daß die erfindungsgemäße Dispersion auch bei längeren Lagerzeiten, beispielsweise durch bakteriellen Einfluß oder durch Pilzbefall, unbrauchbar wird.

Gleichermaßen kann es erfindungsgemäß vorgesehen sein, daß die Dispersion einen Entschäumer, insbesondere einen Silikonentschäumer aufweist. Dieser kann insbesondere auf Basis mindestens eines Polysiloxans bzw. mindestens eines siloxylierten Polyethers ausgebildet sein. Die diesbezügliche Menge an Entschäumer in der Dispersion kann in weiten Bereichen variieren. In diesem Zusammenhang kann die Dispersion den Entschäumer in Mengen von 0,001 bis 2 Gew.-%, insbesondere 0,01 bis 0,8 Gew.-%, bevorzugt 0,05 bis 0,4 Gew.-%, bezogen auf die Dispersion, enthalten. Die Zugabe eines Entschäumers führt zu Vorteilen hinsichtlich der Herstellung der erfindungsgemäßen Dispersion, insbesondere wird eine etwaige Schaumbildung beim Herstellen der Dispersion, insbesondere beim Dispergieren der anorganischen Nanopartikel, weiter verringert bzw. unterbunden.

Gleichermaßen kann die erfindungsgemäße Dispersion ein Netz- und/oder Dispergiermittel enthalten. Hierbei kann es sich insbesondere um ein Netz- und/oder Dispergiermittel auf Basis einer quaternären Ammoniumverbindung, vorzugsweise eines Alkylolammoniumsalzes eines säuregruppenfunktionalisierten Polymers, handeln. Gleichermaßen oder alternativ kann auch ein Netz- und/oder Dispergiermittel auf Basis eines hochmolekularen Blockcopolymers mit pigmentaffinen Gruppen zum Einsatz kommen. Die erfindungsgemäße Dispersion kann das oder die Netz- und/oder Dispergiermittel in Mengen von 0,1 bis 25 Gew.-%, insbesondere 1 bis 20 Gew.-%, bevorzugt 5 bis 15 Gew.-%, bezogen auf die Dispersion, enthalten. Gleichermaßen können auch Mischungen der vorgenannten Netz- und/oder Dispergiermittel eingesetzt werden, wobei die diesbezügliche Gesamtmenge den zuvor genannten Mengenangaben entsprechen sollte.

Im Rahmen der vorliegenden Erfindung ist es somit insgesamt gelungen, eine Dispersion bereitzustellen, welche lagerstabil, insbesondere sedimentationsstabil, ausgebildet ist. Hierunter ist insbesondere zu verstehen, daß die in Dispersion befindlichen anorganischen Nanopartikel über einen verlängerten Zeitraum nicht oder zumindest im wesentlichen nicht sedimentieren bzw. verklumpen bzw. sich nicht absetzen, was andernfalls zu einer Unbrauchbarkeit der Dispersion hinsichtlich ihrer bestimmungsgemäßen Verwendung, beispielsweise in Lacken oder dergleichen, führen würde.

Aufgrund der erfindungsgemäßen Konzeption wird somit in effektiver Weise gewährleistet, daß die anorganischen Nanopartikel über einen langen Zeitraum in Dispersion verbleiben, so daß gleichermaßen eine lange Verwendbarkeit der stabilen Dispersion nach der Erfindung gewährleistet ist.

In diesem Zusammenhang ist die erfindungsgemäße Dispersion bei einer Temperatur von 20°C und unter Atmosphärendruck (1013 mPa) über einen Lagerzeitraum von mindestens 3 Monaten, insbesondere mindestens 6 Monaten, vorzugsweise mindestens 9 Monaten, bevorzugt mindestens 12 Monaten, lagerstabil ausgebildet.

Zudem sollte nach einem Lagerzeitraum von 6 Monaten bei einer Temperatur von 20 °C und unter Atmosphärendruck (1013 mPa) weniger als 10 Gew.-%, insbesondere weniger als 5 Gew.-%, vorzugsweise weniger als 3 Gew.-%, der anorganischen Nanopartikel, bezogen auf die anorganischen Nanopartikel, sedimentiert sein.

Die Dispersion nach der vorliegenden Erfindung kann beispielsweise als Beschichtungsmittel oder Beschichtungssystem, insbesondere Lack, Farbe oder dergleichen, als Kosmetikum, insbesondere Nagellack, als Klebstoff und als Dichtungsmasse ausgebildet sein bzw. vorliegen.

Gleichermaßen können die Dispersionen nach der vorliegenden Erfindung zur Inkorporierung in Beschichtungsstoffe und Beschichtungssysteme, insbesondere Lacke, Farben oder dergleichen, in Kunststoffe, in Schaumstoffe, in Kosmetika, insbesondere Nagellacke, in Klebstoffe und in Dichtungsmassen konzipiert bzw. bestimmt sein bzw. hierzu verwendet werden. Üblicherweise werden zu diesem Zweck die Dispersionen nach der vorliegenden Erfindung in Mengen von 0,1 bis 30 Gew.-%, insbesondere 0,5 bis 20 Gew.-%, vorzugsweise 1 bis 10 Gew.-%, bezogen auf das resultierende Gesamtsystem, eingesetzt.

Gleichermaßen betrifft die vorliegende Erfindung ein Verfahren zur Herstellung der erfindungsgemäßen stabilisierten Dispersion. Was das Herstellungsverfahren für die erfindungsgemäße stabilisierte Dispersion anbelangt, so wird üblicherweise derart vorgegangen, daß zunächst in dem Fachmann an sich bekannter Weise eine nichtstabilisierte Dispersion der betreffenden anorganischen Nanopartikel, gegebenenfalls unter Zusatz der zuvor genannten Additive bzw. Inhaltsstoffe, hergestellt wird. Nachfolgend erfolgt dann, vorzugsweise unter Eintrag von Scherkräften (z. B. unter Verwendung von Rührern, Mischern, Dissolvern etc.), die vorzugsweise homogene Einarbeitung des bzw. der erfindungsgemäß vorgesehenen Stabilisatoren in den erfindungsgemäß spezifizierten Mengen. Diese Vorgehensweise hat insbesondere den Vorteil, daß herkömmliche bzw. handelsübliche Dispersionen von anorganischen Nanopartikeln nachträglich modifiziert werden können, sofern sie noch nicht vollständig überlagert sind (z. B. keine vollständige Agglomeration der einzelnen Teilchen vorliegt, so daß keine Redispersion mehr möglich ist). Bezüglich weitergehender Einzelheiten zur Herstellung der erfindungsgemäßen stabilisierten Dispersion kann zur Vermeidung unnötiger Wiederholungen auf die vorstehenden Ausführungen zu der stabilisierten Dispersion nach der Erfindung verwiesen werden, welche in bezug auf das Herstellungsverfahren entsprechend gelten. Zudem kann in Ergänzung noch auf die nachfolgenden Ausführungsbeispiele verwiesen werden.

Weiterer Gegenstand der vorliegenden Erfindung - gemäß einem **zweiten** Aspekt der vorliegenden Erfindung - ist die Verwendung der erfindungsgemäßen Dispersion in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellacken, in Klebstoffen und in Dichtungsmassen.

Insbesondere kann die erfindungsgemäße stabilisierte Dispersion zur Verbesserung der mechanischen Eigenschaften, insbesondere zur Steigerung der Verschleißbeständigkeit, vorzugsweise der Kratzfestigkeit und/oder Abriebfestigkeit, in den vorgenannten Systemen eingesetzt werden. Insbesondere kann die erfindungsgemäße Dispersion auch zur Verbesserung der UV-Beständigkeit bzw. zur Verbesserung der Verwitterungseigenschaften der mit der erfindungsgemäßen Dispersion ausgerüsteten Systeme und/oder zur Verbesserung der optischen Eigenschaften, wie Brechungsindex, und/oder zur optischen Kennzeichnung insbesondere mittels Leuchtstoffen, beispielsweise im Rahmen von Sicherheitsmarkierungen, eingesetzt werden.

Üblicherweise wird gemäß diesem Erfindungsaspekt die Dispersion nach der vorliegenden Erfindung in Mengen von 0,1 bis 30 Gew.-%, insbesondere 0,5 bis 20 Gew.-%, vorzugsweise 1 bis 10 Gew.-%, bezogen auf das resultierende Gesamtsystem, eingesetzt.

Weiterer Gegenstand der vorliegenden Erfindung - gemäß einem **dritten** Aspekt der vorliegenden Erfindung - sind Beschichtungsstoffe und Beschichtungssysteme, insbesondere Lacke, Farben und dergleichen, Kunststoffe, Schaumstoffe, Kosmetika, insbesondere Nagellacke, Klebstoffe und Dichtungsmassen, welche die zuvor definierten bzw. beschriebenen Dispersionen nach der Erfindung enthalten.

Im allgemeinen wird auch gemäß diesem Erfindungsaspekt die Dispersion nach der vorliegenden Erfindung in Mengen von 0,1 bis 30 Gew.-%, insbesondere 0,5 bis 20 Gew.-%, vorzugsweise 1 bis 10 Gew.-%, bezogen auf das resultierende Gesamtsystem, eingesetzt.

Schließlich ist weiterer Gegenstand der vorliegenden Erfindung - gemäß einem **vierten** Aspekt der vorliegenden Erfindung - ein Verfahren zur Stabilisierung einer Dispersion von anorganischen Nanopartikeln, wobei die Dispersion anorganische Nanopartikel in einem Dispersionsmittel enthält, wobei sich das erfindungsgemäße Verfahren dadurch auszeichnet, daß der Dispersion eine Kombination von
(i) modifiziertem Polyurethan und
(ii) modifiziertem Harnstoff
   zugesetzt wird,
   - wobei das modifizierte Polyurethan (i)
      der allgemeinen Formel (I) 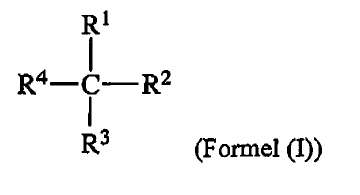 wobei in der Formel (I) die Reste R₁ R₂, R₃ und R₄, jeweils unabhängig voneinander, einen Rest der folgenden allgemeinen Formel 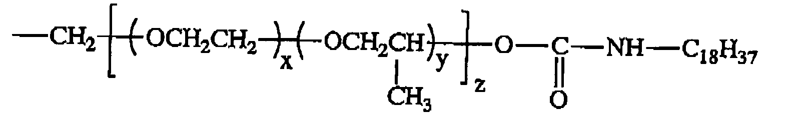 darstellen, wobei in der vorbezeichneten Formel x = 4 ist, y = 1 ist und z = 5 bis 25 ist;
      entspricht; und
   - wobei der modifizierte Harnstoff (ii)
      der allgemeinen Formel (II) 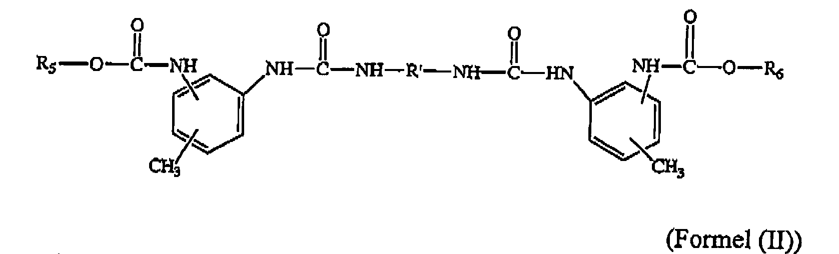 wobei in der Formel (II)
      • R' einen der folgenden Reste bezeichnet:
         -CₚH₂ₚ- mit p = 2 bis 12;
         -(C_{q}H_{2q}-O-C_{q}H_{2q})ᵣ- mit q = 2 bis 4 und r = 1 bis 10; 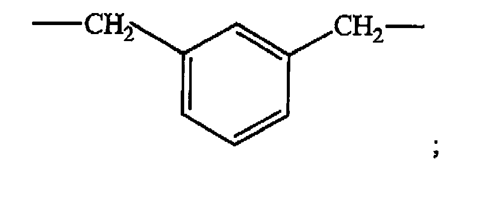 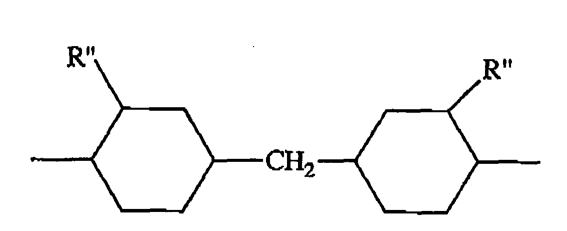 mit R"= H oder CH₃; 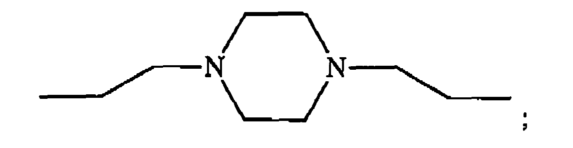
      • R₅ und R₆, jeweils unabhängig voneinander, einen der folgenden Reste darstellen:
         einen n-Alkylrest oder einen iso-Alkylrest mit 4 bis 22 C-Atomen;
         einen Alkenylrest mit 3 bis 18 C-Atomen;
         einen Cycloalkylrest;
         einen Aralkylrest;
         einen Rest der Formel CₘH₂ₘ₊₁(O-CₙH₂ₙ)ₓ-, wobei m = 1 bis 22 ist, n=2bis 4 ist und x =1 bis 15 ist;
         einen Rest der Formel CₘH₂ₘ₊₁(OOC-CᵥH₂ᵥ)ₓ-, wobei m = 1 bis 22 ist, n = 2 bis 4 ist, x =1 bis 15 ist und v = 4 oder 5;
         einen Rest der Formel Z-C₆H₄(O-CₙH₂ₙ)ₓ-, wobei n = 2 bis 4 ist, x = 1 bis 15 ist und Z einen Alkylrest mit 1 bis 12 C-Atomen bezeichnet,
         oder aber der allgemeinen Formel (II') 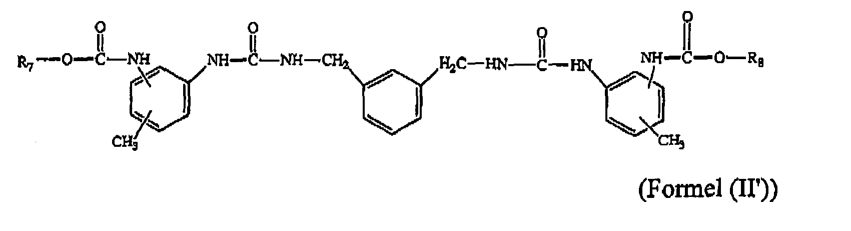 wobei in der Formel (II')
         R₇ und jeweils unabhängig voneinander, einen der folgenden Reste 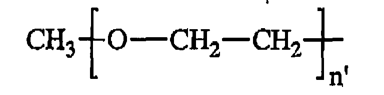 mit n' = 7 bis 16 oder 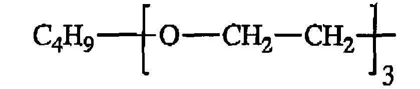
darstellen,
entspricht.

In diesem Zusammenhang kann es im Rahmen des erfindungsgemäßen Verfahrens auch vorgesehen sein, eine nichtstabile bzw. nichtstabilisierte Dispersion von anorganischen Nanopartikeln nachträglich dadurch zu stabilisieren, daß die zuvor genannten Stabilisatoren auf Basis von modifizierten Polyurethanen und modifizierten Harnstoffen einer in dem Fachmann an sich bekannter Art und Weise hergestellten nichtstabilisierten Dispersion zugesetzt werden. Dies kann beispielsweise unter Eintrag von Scherkräften, beispielsweise durch Rühren, in an sich bekannten Apparaturen, beispielsweise einem Mixer, Dissolver etc., durchgeführt werden.

Im Rahmen der vorliegenden Erfindung ist es insgesamt gelungen, eine stabilisierte Dispersion von anorganischen Nanopartikeln bereitzustellen, welche durch die gezielte Zugabe von mindestens einem speziellen Stabilisator über eine ausgezeichnete Lagerstabilität verfügt und welche somit nicht zu einer vorzeitigen Sedimentation neigt. Zudem lassen sich die erfindungsgemäßen Dispersionen in hervorragender Weise im Rahmen ihrer bestimmungsgemäßen Verwendung beispielsweise in Beschichtungsstoffe und Beschichtungssysteme, insbesondere Lacken, Farben und dergleichen, aber auch in Kunststoffe, Schaumstoffe sowie Kosmetika einarbeiten bzw. inkorporieren, was gleichermaßen zu einer signifikanten Verbesserung der Produkteigenschaften beispielsweise hinsichtlich der mechanischen Eigenschaften, wie Kratzfestigkeit, und der Beständigkeit, wie UV-Beständigkeit, führt. Dabei ist es im Rahmen der vorliegenden Erfindung zudem gewährleistet, daß andere geforderte Anwendungseigenschaften der mit der erfindungsgemäßen Dispersion ausgerüsteten bzw. versehenen Systeme nicht negativ beeinflußt werden (z. B. Glanzverhalten, Oberflächenglätte, Adhäsionsvermögen etc.).

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### Ausführungsbeispiele I:

Die Herstellung der modifizierten Polyurethane erfolgt in der in Ausführungsbeispiel 103 der US 4 079 028 A beschriebenen Weise. Die modifizierten Polyurethane gemäß den nachfolgenden Beispielen B und E genügen der allgemeinen Formel (I).

**Tabelle 1: Modifizierte Polyurethane**

| **Beispiel** | **X** | **EO/PO (Y₇ = H / CH₃)** | **Y₈** |
|---|---|---|---|
| A | TMP | 223/45 | C₁₈ |
| B | Pentaerythrit | 265/66 | C₁₈ |
| C | Dipentaerythrit | 300/75 | C₁₈ |
| D | Sorbitol | 155/0 | C₁₈ |
| E | Pentaerythrit | 177/44 | C₁₈ |
| F | TMP | 245/50 | C₁₈ |

Die Herstellung der Produkte der allgemeinen Formel (II') erfolgt wie in der DE 100 39 837 C2 beschrieben.

**Tabellen 2: Produkte der allgemeinen Formel (II')**

| **Beispiel** | **R₇** | **R₈** | **Molverhältnis** |
|---|---|---|---|
| G | Butyltriglykol | i-Tridecyl | 1 : 1 |
| H | Butyltriglykol | MPEG 500 | 1 : 1,75 |
| I | Butyltriglykol | MPEG 350 | 1 : 1,5 |
| J | Butyltriglykol | MPEG 350 / MPEG 500 (1:1) | 1 : 1 |
| K | MPEG 350 | MPEG 500 | 1 : 2 |

### Herstellungsbeispiele:

### Beispiel 1: Herstellung einer nichtstabilisierten Dispersion von anorganischen Nanopartikeln (Vergleich)

Es wird eine wäßrig-basierte Dispersion von Zinkoxid-Nanopartikeln (mittlerer Teilchendurchmesser D₅₀: ca. 60 nm) hergestellt. Zu diesem Zweck werden in dem Fachmann an sich bekannter Weise 50,5 g ZnO-Nanopartikel in einem wäßrig-basierten Dispersionsmittel aus 37,87 g Wasser, 0,1 g Entschäumern, 0,3 g Konservierungsmittel und 11,22 g Netz- und/oder Dispergiermitteln dispergiert. Es resultiert eine nichterfindungsgemäße, wäßrig-basierte 50,5gew.-%ige nichtstabilisierte Dispersion von ZnO-Nanopartikeln. Die Lagerstabilitäts- bzw. Sedimentationseigenschaften sind nachfolgend aufgeführt.

### Beispiel 2: Herstellung von stabilisierten Dispersionen von anorganischen Nanopartikeln mit hydrophob modifiziertem Polyurethan als Stabilisator (nichterfindungsgemäß)

Ausgehend von der Dispersion gemäß Ausnihrungsbeispiel 1 werden stabilisierte Dispersionen von anorganischen Nanopartikeln mit variierenden Mengen an Stabilisator hergestellt. Zu diesem Zweck werden der Dispersion aus Beispiel 1 variierende Mengen eines in obiger Tabelle 1 aufgeführten hydrophob modifizierten Polyurethans (i) ("Stabilisator I") zugesetzt und unter Eintrag von Scherkräften hierin homogen eingearbeitet. Auf diese Weise resultieren stabilisierte Dispersionen von anorganischen Nanopartikeln mit einem hydrophob modifizierten Polyurethan als Stabilisator. Die betreffenden Lagerstabilitäts- bzw. Sediznentationseigenschaften der resultierenden Dispersionen sind nachstehend aufgeführt.

### Beispiel 3: Herstellung von stabilisierten Dispersionen von anorganischen Nanopartikeln mit modifiziertem Harnstoff als Stabilisator (nichterfindungsgemäß)

Ausgehend von der Dispersion gemäß Ausführungsbeispiel 1 werden stabilisierte Dispersionen von anorganischen Nanopartikeln mit variierenden Mengen an Stabilisator hergestellt. Zu diesem Zweck werden der Dispersion aus Beispiel 1 variierende Mengen eines modifizierten Harnstoffs (ii) der obigen Formel (II') ("Stabilisator II") zugesetzt und unter Eintrag von Scherkräften hierin homogen eingearbeitet. Auf diese Weise resultieren stabilisierte Dispersionen von anorganischen Nanopartikeln mit einem modifizierten Harnstoff als Stabilisator. Die betreffenden Lagerstabilitäts- bzw. Sedimentationseigenschaften der resultierenden Dispersionen sind nachstehend aufgeführt.

### Beispiel 4: Herstellung von stabilisierten Dispersionen von anorganischen Nanopartikeln mit einer Kombination von hydrophob modifiziertem Polyurethan und modifiziertem Harnstoff als gemeinsame Stabilisatoren (erfindungsgemäß und nichterfindungsgemäß)

Ausgehend von der Dispersion gemäß Ausführungsbeispiel 1 werden stabilisierte Dispersionen von anorganischen mit variierenden Mengen an Stabilisator hergestellt. Zu diesem Zweck werden der Dispersion aus Beispiel 1 variierende Mengen einer Kombination (i) eines hydrophob modifizierten Polyurethans der obigen Formel (I') und (ii) eines modifizierten Harnstoffs der obigen Formel (II') (Molgewichtsverhältnis Stabilisator I / Stabilisator II > 5) als gemeinsame Stabilisatoren (Costabilisatoren) in variierenden Mengenverhältnissen Stabilisator I / Stabilisator II bzw. Stabilisator (i) / Stabilisator (ii) zugesetzt und unter Eintrag von Scherkräften hierin homogen eingearbeitet. Auf diese Weise resultieren stabilisierte Dispersionen von anorganischen Nanopartikeln mit einem hydrophob modifizierten Polyurethan und einem modifizierten Harnstoff als gemeinsame Stabilisatoren. Die betreffenden Lagerstabilitäts- bzw. Sedimentationseigenschaften der resultierenden Dispersionen sind nachstehend aufgeführt. Die Beispiele 4 in den Tabellen 3 und 5 beschreiben erfindungsgemäße Dispersionen, wohingegen Beispiel 4 in Tabelle 4 nichterfindungsgemäße Dispersionen betrifft.

### Anwendungsbeispiele:

Die vorstehend hergestellten Dispersionen wurden nachfolgend einem beschleunigten Alterungstest zu Zwecken der Beurteilung der Lagerstabilität bzw. Sedimentationsneigung sowie der rheologischen Eigenschaften unterzogen. Die Ergebnisse sind in den nachfolgenden Tabellen wiedergegeben, wobei jeweils ein Notensystem mit Noten von 1 bis 5 verwendet wird.

**Tabelle 3:**

| | nach 24 Std. Lagerung | | nach 5 Tagen Lagerung | | nach 14 Tagen Lagerung | |
|---|---|---|---|---|---|---|
| | bei 50° C | | bei 50° C | | bei 50° C | |
| | Rheologie | Bodensatz | Rheologie | Bodensatz | Rheologie | Bodensatz |
| **Bsp.1** (Vergleich) | 1-2 | 4 | 2 | 4-5* | 2 | 5** |
| **Bsp. 2** | | | | | | |
| 0,001 Gew.% Bp. B | 1-2 | 2-3 | 2 | 3 | 2 | 4* |
| 0,4 Gew.-% Bsp.B | 1-2 | 1-2 | 2 | 2 | 2 | 2-3 |
| 8 Gew.-% Bsp.B | 3-4 | 1-2 | 3-4 | 2 | 3-4 | 2 |
| **Bsp. 3** | | | | | | |
| 0,0005 Gew.-% Bsp. J | 1-2 | 2-3 | 2 | 3 | 2 | 4* |
| 0,3 Gew.-% Bsp. J | 1-2 | 1-2 | 2 | 2 | 2-3 | 2-3 |
| 5 Gew.-% Bsp. J | 4 | 1-2 | 4 | 2 | 4 | 2-3 |
| **Bsp.** 4 | | | | | | |
| 0,5 Gew.-% gesamt (Stab. B+J) Stab. B/Stab. J = ca. 1 : 1 | 1-2 | 1 | 1-2 | 1-2 | 2 | 2 |
| 0,5 Gew.% gesamt (Stab. B+J) Stab. B/Stab. J= ca. 4 : 1 | 1 | 1 | 1 | 1 | 1-2 | 1 |
| 0,5 Gew.% gesamt (Stab. B+J) Stab. B/Stab. J ca. 10 : 1 | 1-2 | 1 | 1-2 | 1-2 | 2 | 2 |
| 1 Gew.-% gesamt (Stab. B+J) Stab. B/Stab. J ca. 4 : 1 | 1 | 1 | 1 | 1 | 1-2 | 1-2 |
| Bodensatz- | 1 = kein Bodensatz | | Rheologie: | | 1 = niedrigviskos | |
| = | 5viel Bodensatz | | | | 5 = stichfest | |

**Tabelle 4:**

| | nach 24 Std. Lagerung | | nach 5 Tagen Lagerung | | nach 14 Tagen Lagerung | |
|---|---|---|---|---|---|---|
| | bei 50° C | | bei 50° C | | bei 50° C | |
| | Rheologie | Bodensatz | Rheologie | Bodensatz | Rheologie | Bodensatz |
| **Bsp.1** (Vergleich) | 1-2 | 4 | 2 | 4-5* | 2 | 5** |
| **Bsp. 2** | | | | | | |
| 0,001 Gew.-% Bsp. D | 2 | 3 | 3 | 4 | 3 | 4* |
| 0,4 Gew.-% Bsp. D | 2 | 2 | 2-3 | 2-3 | 2-3 | 2-3 |
| 8 Gew.-% Bsp. D | 3-4 | 2 | 4 | 3 | 4 | 3 |
| **Bsp. 3** | | | | | | |
| 0,0005 Gew.-% Bsp. G | 2 | 3 | 2 | 3 | 2 | 4* |
| 0,3 Gew.-% Bsp, G | 2 | 1-2 | 2 | 2 | 2-3 | 2-3 |
| 5 Gew.-% Bsp. G | 4 | 1-2 | 4 | 2 | 4 | 2-3 |
| **Bsp. 4** | | | | | | |
| 0,5 Gew.-% gesarnt (Stab. D+G) Stab. D/Stab. G = ca. 1 : 1 | 2 | 1 | 2 | 1-2 | 2 | 2-3 |
| 0,5 Gew.-% gesamt (Stab. D+G) Stab. D/Stab. G = ca. 4: 1 | 1-2 | 1-2 | 2 | 2 | 2 | 3 |
| 0,5 Gew.-% gesamt (Stab. D+G) Stab. D/Stab. G ca. 10 : 1 | 1-2 | 2 | 1-2 | 2 | 2-3 | 2 |
| 1 Gew.-% gesarnt (Stab. D+G) Stab. D/Stab. G ca.4: 1 | 1 | 1-2 | 1-2 | 1-2 | 1-2 | 1-2 |
| Bodensatz: | 1 = kein Bodensatz | | Rheologie: | | 1 = niedrigviskos | |
| | 5 = viel Bodensatz | | | | 5 = stichfest | |

**Tabelle 5:**

| | nach 24 Std. Lagerung | | nach 5 Tagen Lagerung | | nach 14 Tagen Lagerung | |
|---|---|---|---|---|---|---|
| | bei 50° C | | bei 50° C | | bei 50° C | |
| | Rheologie | Bodensatz | Rheologie | Bodensatz | Rheologie | Bodensatz |
| **Bsp.** 1 (Vergleich) | 1-2 | 4 | 2 | 4-5* | 2 | 5** |
| **Bsp.** 2 | | | | | | |
| 0,001 Gew.-% Bsp. E | 1-2 | 2-3 | 2 | 3 | 3 | 4* |
| 0,4 Gew.-% Bsp. E | 2 | 2 | 2 | 3 | 2 | 3 |
| 8 Gew.-% Bsp. E | 3-4 | 2-3 | 3-4 | 2-3 | 3-4 | 3 |
| **Bsp. 3** | | | | | | |
| 0,0005 Gew.-% Bsp.H | 1-2 | 2-3 | 2 | 3 | 2 | 4* |
| 0,3 Gew.-% Bsp. H | 1-2 | 1-2 | 2 | 3 | 3 | 4* |
| 5 Gew.-% Bsp. H | 4 | 2 | 4 | 2 | 4 | 2-3* |
| **Bsp. 4** | | | | | | |
| 0,5 Gew.-% gesamt (Stab. E+H) Stab, E/Stab. H = ca. 1 : 1 | 2 | 1 | 2 | 1-2 | 3 | 2 |
| 0,5 Gew.-% gesamt (Stab. E+H) Stab. E/Stab. H = ca. 4: 1 | 1 | 1 | 1 | 1 | 1-2 | 1 |
| 0,5 Gew.-% gesamt (Stab. E+H) Stab. E/Stab. H ca. 10 : 1 | 1-2 | 1 | 2 | 1-2 | 2 | 2 |
| 1 Gew.-% gesamt (Stab. E+H) Stab. E/Stab H ca. 4 : 1 | 1 | 1 | 1 | 1 | 2 | 1-2 |
| Bodensatz: | 1 = kein Bodensatz | | Rheologie: | | 1 = niedrigviskos | |
| | 5 = viel Bodensatz | | | | 5 = stichfest | |

| | | | | | | |
|---|---|---|---|---|---|---|
| * leichte Synärese ** vollständige Sedimentation, Synärese, keine Pedisporgierung möglich | | | | | | |

Die vorstehenden Tabellen 3 bis 5 zeigen, daß sich mit den eingesetzten Stabilisatoren I und II eine signifikante Verbesserung der Lagerstabilität bzw. eine signifikante Verringerung der Sedimentationsneigung der vorstehenden Dispersionen erreichen läßt. Ein besonders guter Effekt, welcher über die Einzelwirkung der jeweiligen Stabilisatoren hinausgeht und somit als synergistisch zu bewerten ist, läßt sich durch den gemeinsamen Einsatz beider Stabilisatoren erreichen, wobei durch gezielte Auswahl des betreffenden Mengenverhältnisses eine Wirkoptimierung erreicht werden kann.

Die Ergebnisse zeigen im übrigen, daß die eingesetzten Stabilisatoren die rheologischen Eigenschaften bzw. Fließfähigkeitseigenschaften zumindest im wesentlichen unverändert lassen bzw. nur soweit verändern, daß nach wie vor eine bestimmungsgemäße Anwendung möglich ist.

Im übrigen wurde das Viskositätsverhalten einer ausgewählten erfindungsgemäßen Dispersion nach unterschiedlichen Lagerzeiträumen verfolgt. Die Ergebnisse sind in der nachstehenden Tabelle 6 wiedergegeben und zeigen, daß unter Einsatz der erfindungsgemäßen Stabilisatoren die Viskositätseigenschaften der stabilisierten Dispersionen im wesentlichen unverändert bleiben.

**Tabelle 6:**

| | | |
|---|---|---|
| Bsp. 4 | Brookfield-Viskosität (23° C) | |
| 0,5 Gew.-% Stab. B + J | Spindel 4 (ASTMD 2196) | |
| gesamt | 5 U/min | 50 U/min |
| (Stab. B/Stab. J ca. 4: 1) | | |
| nach 24 Std. Lagerung | 2.090 mPas | 1,001 mPas |
| bei 50° C | | |
| nach 7 Tagen Lagerung | 2.120 mPas | 1.016 mPas |
| bei 50°C | | |
| nach 14 Tagen Lagerung | 2.150 mPas | 1.046 mPas |
| bei 50° C | | |

### Ausführungsbeispiele II:

### Herstellungsbeispiele:

### Beispiel 1': Herstellung einer nichtstabilisierten Dispersion von anorganischen Nanopartikeln (Vergleich)

Es wird eine wäßrig-basierte Dispersion von Zinkoxid-Nanopartikeln (mittlerer Teilchendurchmesser D₅₀: ca. 60 nm) hergestellt. Zu diesem Zweck werden in dem Fachmann an sich bekannter Weise 50,5 g ZnO-Nanopartikel in einem wäßrig-basierten Dispersionsmittel aus 37,87 g Wasser, 0,1 g Entschäumern, 0,3 g Konservierungsmittel und 11,22 g Netz- und/oder Dispergiermitteln dispergiert. Es resultiert eine nichterfindungsgemäße, wäßrig-basierte 50,5gew.-%ige nichtstabilisierte Dispersion von ZnO-Nanopartikeln. Die Lagerstabilitäts- bzw. Sedimentationseigenschaften sind nachfolgend aufgeführt.

### Beispiel 2': Herstellung von stabilisierten Dispersionen von anorganischen Nanopartikeln mit modifiziertem Polyurethan als Stabilisator (nichterfindungsgemäß)

Ausgehend von der Dispersion gemäß Ausführungsbeispiel 1' werden stabilisierte Dispersionen von anorganischen Nanopartikeln mit variierenden Mengen an Stabilisator hergestellt. Zu diesem Zweck werden der Dispersion aus Beispiel 1' variierende Mengen eines modifizierten Polyurethans (i) der obigen Formel (I) ("Stabilisator I") zugesetzt und unter Eintrag von Scherkräften hierin homogen eingearbeitet. Auf diese Weise resultieren stabilisierte Dispersionen von anorganischen Nanopartikeln mit einem modifizierten Polyurethan als Stabilisator. Die betreffenden Lagerstabilitäts- bzw. Sedimentationseigenschaften der resultierenden Dispersionen sind nachstehend aufgeführt.

### Beispiel 3': Herstellung von stabilisierten Dispersionen von anorganischen Nanopartikeln mit modifiziertem Harnstoff als Stabilisator (nichterfindangsgemäß)

Ausgehend von der Dispersion gemäß Ausführungsbeispiel 1' werden stabilisierte Dispersionen von anorganischen Nanopartikeln mit variierenden Mengen an Stabilisator hergestellt. Zu diesem Zweck werden der Dispersion aus Beispiel 1' variierende Mengen eines modifizierten Harnstoffs (ii) der obigen Formel (II') ("Stabilisator II") zugesetzt und unter Eintrag von Scherkräften hierin homogen eingearbeitet. Auf diese Weise resultieren stabilisierte Dispersionen von anorganischen Nanopartikeln mit einem modifizierten Harnstoff als Stabilisator. Die betreffenden Lagerstabilitäts- bzw. Sedimentationseigenschaften der resultierenden Dispersionen sind nachstehend aufgeführt.

### Beispiel 4': Herstellung von stabilisierten Dispersionen von anorganischen Nanopartikeln mit einer Kombination von modifiziertem Polyurethan und modifiziertem Harnstoff als gemeinsame Stabilisatoren (erfindungsgemäß)

Ausgehend von der Dispersion gemäß Ausführungsbeispiel 1' werden erfindungsgemäße stabilisierte Dispersionen von anorganischen Nanopartikeln mit variierenden Mengen an Stabilisator hergestellt. Zu diesem Zweck werden der Dispersion aus Beispiel 1' variierende Mengen einer Kombination (i) eines modifizierten Polyurethans der obigen Formel (I) und (ii) eines modifizierten Harnstoffs der obigen Formel (II') (Molgewichtsverhältnis Stabilisator I / Stabilisator II > 5) als gemeinsame Stabilisatoren (Costabilisatoren) in variierenden Mengenverhältnissen Stabilisator I / Stabilisator II bzw. Stabilisator (i) / Stabilisator (ii) zugesetzt und unter Eintrag von Scherkräften hierin homogen eingearbeitet. Auf diese Weise resultieren erfindungsgemäße stabilisierte Dispersionen von anorganischen Nanopartikeln mit einem modifizierten Polyurethan und einem modifizierten Harnstoff als gemeinsame Stabilisatoren. Die betreffenden Lagerstabilitäts- bzw. Sedimentationseigenschaften der resultierenden erfindungsgernüßen Dispersionen sind nachstehend aufgeführt.

### Anwendungsbeispiele:

Die vorstehend hergestellten Dispersionen wurden nachfolgend einem besehleunigten Alterungstest zu Zwecken der Beurteilung der Lagerstabilität bzw. Sedimentationsneigung sowie der rheologischen Eigenschaften unterzogen. Die Ergebnisse sind in der nachfolgenden Tabelle 1' wiedergegeben, wobei jeweils ein Notensystem mit Noten von 1 bis 5 verwendet wird.

**Tabelle 1':**

| | nach 24 Std. Lagerung | | nach 5 Tagen Lagerung | | nach 14 Tagen Lagerung | |
|---|---|---|---|---|---|---|
| | bei 50° C | | bei 50° C | | bei 50° C | |
| | Rheologie | Bodensatz | Rheologie | Bodensatz | Rheologie | Bodensatz |
| **Bsp.1'** (Vergleich) | 1-2 | 4 | 2 | 4.5* | 2 | 5** |
| **Bsp. 2'** | | | | | | |
| 0,001 Gew.% Stab. I | 1-2 | 2.3 | 2 | 3 | 2 | 4* |
| 0,4 Gew.% Stab. 1 | 1-2 | 1-2 | 2 | 2 | 2 | 2-3 |
| 8 Gew.% Stab. I | 3-4 | 1.2 | 3-4 | 2 | 3-4 | 2 |
| **Bsp. 3'** | | | | | | |
| 0,0005 Gew.% Stab. II | 1-2 | 2-3 | 2 | 3 | 2 | 4* |
| 0,3 Gew.% Stab. II | 1-2 | 1-2 | 2 | 2 | 2-3 | 2-3 |
| 5 Gew.% Stab. II | 4 | 1-2 | 4 | 2 | 4 | 2-3 |
| **Bsp. 4'** | | | | | | |
| 0,5 Gew.% gesamt (Stab. I+II) Stab. I/Stab. II = ca 1 : 1 | 1-2 | 1 | 1-2 | 1-2 | 2 | 2 |
| 0,5 Gew.% gesamt (Stab. I+II) Stab. I/Stab. II = ca.4:1 | 1 | 1 | 1 | 1 | 1-2 | 1 |
| 0,5 Gew.% gesamt (Stab. I+II) Stab. I/Stab. II ca. 10 : 1 | 1-2 | 1 | 1-2 | 1-2 | 2 | 2 |
| 1 Gew. % gesamt (Stab. I+II) Stab. I/Stab. II ca.4: 1 | 1 | 1 | 1 | 1 | 1-2 | 1-2 |
| Bodensatz: | 1 = kein Bodensatz | | Rheologie: | | 1= niedrigviskos | |
| | 5 = viel Bodensatz | | | | 5 = stichfest | |

| | | | | | | |
|---|---|---|---|---|---|---|
| * leichte Synärese ** vollständige Sedimentation, Synärese, keine Redispergierung möglich | | | | | | |

Die vorstehende Tabelle I' zeigt, daß sich mit den eingesetzten Stabilisatoren I und II eine signifikante Verbesserung der Lagerstabilität bzw. eine signifikante Verringerung der Sedimentationsneigung der vorstehenden Dispersionen erreichen läßt. Ein besonders guter Effekt, welcher über die Einzelwirkung der jeweiligen Stabilisatoren hinausgeht und somit als synergistisch zu bewerten ist, läßt sich durch den erfindungsgemäßen gemeinsamen Einsatz beider Stabilisatoren erreichen, wobei durch gezielte Auswahl des betreffenden Mengenverhältnisses eine Wirkoptimierung erreicht werden kann.

Die Ergebnisse zeigen im übrigen, daß die eingesetzten Stabilisatoren die rheologischen Eigenschaften bzw. Fließfähigkeitseigenschaften zumindest im wesentlichen unverändert lassen bzw. nur soweit verändern, daß nach wie vor eine bestimmungsgemäße Anwendung möglich ist.

Im übrigen wurde das Viskositätsverhalten einer ausgewählten Dispersion nach unterschiedlichen Lagerzeiträumen verfolgt. Die Ergebnisse sind in der nachstehenden Tabelle 2' wiedergegeben und zeigen, daß unter Einsatz der erfindungsgemäßen Stabilisatoren die Viskositätseigenschaften der stabilisierten Dispersionen im wesentlichen unverändert bleiben.

**Tabelle 2':**

| Bsp. 4' | Brookfield-Viskosität (23° C) | |
|---|---|---|
| 0,5 Gew.-% Stab. I + II | Spindel 4 (ASTM D 2196) | |
| gesamt | 5 U/min | 50 U/min |
| (Stab. I/Stab. II ca. 4 : 1) | | |
| nach 24 Std. Lagerung | 2.090 mPas | 1.001 mPas |
| bei 50° C | | |
| nach 7 Tagen Lagerung | 2.120 mPas | 1.016 mPas |
| bei 50° C | | |
| nach 14 Tagen Lagerung | 2.150 mPas | 1.046 mPas |
| bei 50° C | | |

## Patentansprüche

1. Stabile Dispersion von anorganischen Nanopartikeln, enthaltend anorganische Nanopartikel in einem Dispersionsmittel,
**dadurch gekennzeichnet,**
**daß** der Dispersion eine Kombination von
(i) modifiziertem Polyurethan und
(ii) modifiziertem Harnstoff
zugesetzt ist,
- wobei das modifizierte Polyurethan (i)
der allgemeinen Formel (I) 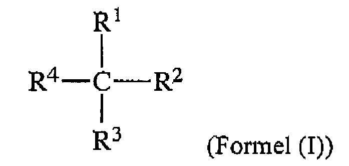 wobei in der Formel (I) die Reste R₁, R₂, R₃ und R₄, jeweils unabhängig voneinander, einen Rest der folgenden allgemeinen Formel 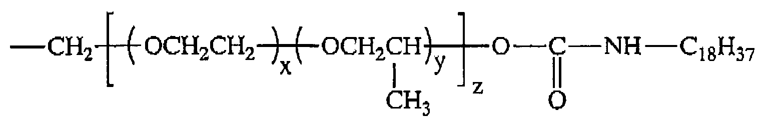 darstellen, wobei in der vorbezeichneten Formel x = 4 ist, y = 1 ist und z = 5 bis 25 ist;
entspricht; und
- wobei der modifizierte Harnstoff (ii)
der allgemeinen Formel (II) 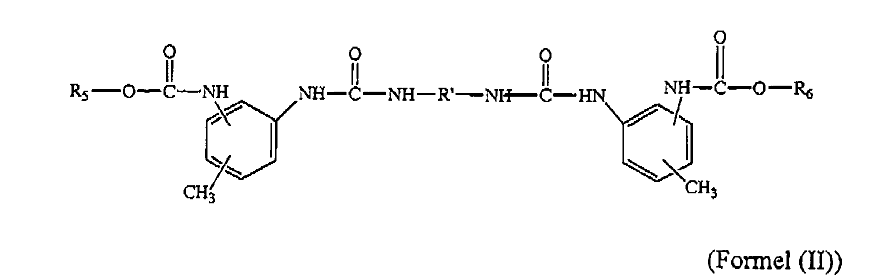 wobei in der Formel (II)
• R' einen der folgenden Reste bezeichnet:
- CₚH₂ₚ- mit p = 2 bis 12;
- (C_{q}H_{2q}-O-C_{q}H_{2q})ᵣ- mit q = 2 bis 4 und r = 1 bis 10; 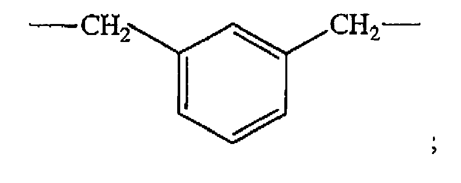 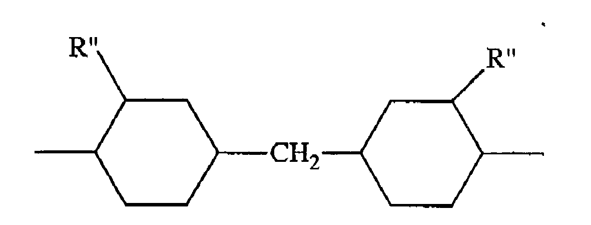 mit R"= H oder CH₃; 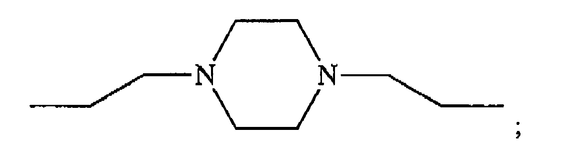
• R₅ und R₆, jeweils unabhängig voneinander, einen der folgenden Reste darstellen:
einen n-Alkylrest oder einen iso-Alkylrest mit 4 bis 22 C-Atomen;
einen Alkenylrest mit 3 bis 18 C-Atomen;
einen Cycloalkylrest;
einen Aralkylrest;
einen Rest der Formel CₘH₂ₘ₊₁(O-CₙH₂ₙ)ₓ-, wobei m = 1 bis 22 ist,
n = 2 bis 4 ist und x = 1 bis 15 ist;
einen Rest der Formel CₘH₂ₘ₊₁(OOC-CᵥH₂ᵥ)ₓ-, wobei m = 1 bis 22 ist,
n = 2 bis 4 ist, x = 1 bis 15 ist und v = 4 oder 5;
einen Rest der Formel Z-C₆H₄(C)-CₙH₂ₙ)ₓ-, wobei n = 2 bis 4 ist, x = 1
bis 15 ist und Z einen Alkylrest mit 1 bis 12 C-Atomen bezeichnet,
oder aber der allgemeinen Formel (II') 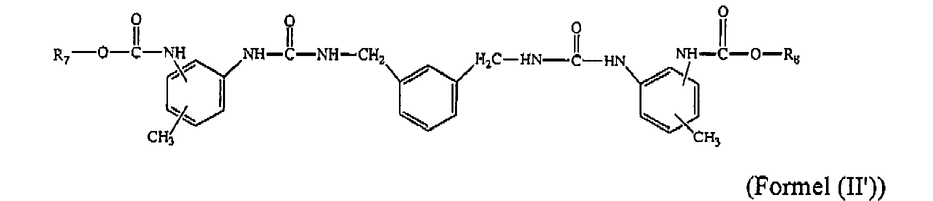 wobei in der Formel (II')
R₇ und R₈, jeweils unabhängig voneinander, einen der folgenden Reste 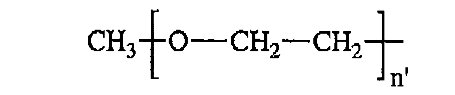 mit n' = 7 bis 16 oder 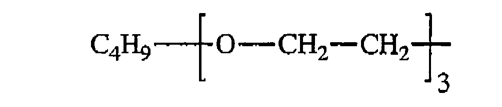 darstellen,
entspricht.

2. Dispersion nach Anspruch 1, **dadurch gekennzeichnet, daß** (i) das modifizierte Polyurethan in Mengen von 0,002 bis 5 Gew.-%, insbesondere 0,005 bis 2 Gew.-%, vorzugsweise 0,01 bis 1 Gew.-%, besonders bevorzugt 0,05 bis 0,75 Gew.-%, ganz besonders bevorzugt 0,1 bis 0,5 Gew.-%, bezogen auf die Dispersion, zugesetzt ist und/oder daß (ii) der modifizierte Harnstoff in Mengen von 0,001 bis 2 Gew.-%, insbesondere 0,002, bis 1,5 Gew.-%, bevorzugt 0,01 bis 1 Gew.-%, besonders bevorzugt 0,05 bis 0,3 Gew.-%, bezogen auf die Dispersion, zugesetzt ist.

3. Dispersion nach Anspruch 1 oder 2, **dadurch gekennzeichnet, daß** die Kombination von (i) modifiziertem Polyurethan und (ii) modifiziertem Harnstoff in einem gewichtsbezogenen Mengenverhältnis von (i) zu (ii) von ≥ 1 : 1, insbesondere ≥ 2 : 1, bevorzugt ≥ 3 : 1, zugesetzt ist und/oder daß die Kombination in einem gewichtsbezogenen Mengenverhältnis von (i) zu (ii) im Bereich von 10 : 1 bis 1 : 1, insbesondere 7 : 1 bis 1,5 : 1, vorzugsweise 6 : 1 bis 2 : 1, besonders bevorzugt 5 : 1 bis 3 : 1, zugesetzt ist.

4. Dispersion nach einem der vorangehenden Ansprüche, **dadurch gekennzeichnet, daß** die Dispersion die Kombination von (i) modifiziertem Polyurethan und (ii) modifiziertem Harnstoff in einer Gesamtmenge von 0,003 bis 7 Gew.-%, insbesondere 0,005 bis 5 Gew.-%, vorzugsweise 0,01 bis 3 Gew.-%, besonders bevorzugt 0,1 bis 2 Gew.-%, bezogen auf die Dispersion, enthält.

5. Dispersion nach einem der vorangehenden Ansprüche, **dadurch gekennzeichnet, daß** die Dispersion eine dynamische Brookfield-Viskosität gemäß ASTM D 2196 bei 5 U/min und 23 °C von höchstens 25.000 mPa·s, insbesondere höchstens 20.000 mPa·s, aufweist und/oder daß die Dispersion eine dynamische Brookfield-Viskosität gemäß ASTM D 2196 bei 5 U/min und 23 °C im Bereich von 1.000 bis 25.000 mPa·s, insbesondere 1.250 bis 20.000 mPa·s, vorzugsweise 1.500 bis 15.000 mPa·s, bevorzugt 2.000 bis 10.000 mPa·s, aufweist.

6. Dispersion nach einem der vorangehenden Ansprüche, **dadurch gekennzeichnet, daß** die Dispersion eine dynamische Brookfield-Viskosität gemäß ASTM D 2196 bei 50 U/min und 23 °C von höchstens 7.000 mPa·s, insbesondere höchstens 5.000 mPa·s, aufweist und/oder daß die Dispersion eine dynamische Brookfield-Viskosität gemäß ASTM D 2196 bei 50 U/min und 23 °C im Bereich von 500 bis 7.000 mPa·s, insbesondere 750 bis 6.000 mPa·s, vorzugsweise 900 bis 5.000 mPa·s, bevorzugt 1.000 bis 4.000 mPa·s, aufweist.

7. Dispersion nach einem der vorangehenden Ansprüche, **dadurch gekennzeichnet, daß** die anorganischen Nanopartikel Teilchengrößen im Bereich von 0,5 bis 2.000 nm, insbesondere 1 bis 1.000 nm, vorzugsweise 2 bis 750 nm, bevorzugt 2 bis 500 nm, besonders bevorzugt 5 bis 300 nm, ganz besonders bevorzugt 5 bis 100 nm, aufweisen.

8. Dispersion nach einem der vorangehenden Ansprüche, **dadurch gekennzeichnet, daß** die anorganischen Nanopartikel aus mindestens einem gegebenenfalls dotierten Oxid, Hydroxid, Oxidhydroxid, Sulfat, Phosphat, Sulfid, Carbonat, Nitrid, Silikat, Carbid, Vanadat, Molybdat, Wolframat und/oder Halogenid, insbesondere Fluorid, mindestens eines Metalls oder Halbmetalls oder aber aus einem Metall/Element oder aber aus Mischungen oder Kombinationen solcher Verbindungen, vorzugsweise aus mindestens einem anorganischen Oxid, Hydroxid oder Oxidhydroxid, besonders bevorzugt einem anorganischen Oxid, gebildet sind oder diese Verbindung(en) enthalten.

9. Dispersion nach einem der vorangehenden Ansprüche, **dadurch gekennzeichnet, daß** die anorganischen Nanopartikel aus mindestens einem gegebenenfalls dotierten Oxid, Hydroxid und/oder Oxidhydroxid, vorzugsweise Oxid, des Aluminiums, Siliziums, Zinks, Titans, Cers, Indiums, Antimons, Zinns und/oder Eisens, einem Erdalkalisulfat, einem Erdalkali- oder Lanthanphosphat, einem Cadmium- oder Zinksulfid, einem Erdalkalicarbonat, einem Aluminium- oder Siliziumnitrid, einem Erdalkalisilkat, einem Siliciumcarbid oder Silber oder aber aus Mischungen oder Kombinationen solcher Verbindungen gebildet sind oder diese Verbindung(en) enthalten.

10. Dispersion nach einem der vorangehenden Ansprüche, **dadurch gekennzeichnet, daß** die anorganischen Nanopartikel aus mindestens einem gegebenenfalls dotiertes Oxid, Hydroxid und/oder Oxidhydroxid, vorzugsweise Oxid, des Aluminiums, Siliziums, Zinks, Titans, Cers, Indiums, Antimons, Zinns und/oder Eisens gebildet sind oder diese Verbindung(en) enthalten und/oder daß die anorganischen Nanopartikel auf Basis von Zinkoxid, Indium/Zinn-Oxiden (ITO) oder Antimon/Zinn-Oxiden (ATO) ausgebildet sind und/oder daß die anorganischen Nanopartikel Zinkoxidpartikel, indium/zinn-oxidische Partikel (ITO-Partikel) oder antimon/zinn-oxidische Partikel sind und/oder daß die anorganischen Nanopartikel oberflächenmodifiziert, insbesondere mittels Polysiloxangruppen oberflächenmodifiziert, ausgebildet sind.

11. Dispersion nach einem der vorangehenden Ansprüche, **dadurch gekennzeichnet, daß** die Dispersion lagerstabil, insbesondere sedimentationsstabil, ausgebildet ist, wobei die Dispersion bei einer Temperatur von 20 °C und unter Atmosphärendruck (1013 mPa) über einen Lagerzeitraum von mindestens 3 Monaten, insbesondere mindestens 6 Monaten, vorzugsweise mindestens 9 Monaten, bevorzugt mindestens 12 Monaten, lagerstabil ausgebildet ist und/oder wobei nach einem Lagerzeitraum von 6 Monaten bei einer Temperatur von 20 °C und unter Atmosphärendruck (1013 mPa) weniger als 10 Gew.-%, insbesondere weniger als 5 Gew.-%, vorzugsweise weniger als 3 Gew.-%, der anorganischen Nanopartikel, bezogen auf die anorganischen Nanopartikel, sedimentiert sind.

12. Verwendung einer Dispersion nach den vorangehenden Ansprüchen in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellacken, in Klebstoffen und in Dichtungsmassen

13. Verwendung nach Anspruch 12 zur Verbesserung der mechanischen Eigezischaften, insbesondere zur Steigerung der Verschleißbeständigkeit, vorzugsweise der Kratzfestigkeit und/oder Abriebfestigkeit, und/oder zur Verbesserung der UV-Beständigkeit und/oder zur Verbesserung der Verwitterungseigenschaften und/oder zur Verbesserung der optischen Eigenschaften und/oder zur optischen Kennzeichnung insbesondere mittels Leuchtstoffen.

14. Beschichtungsstoffe und Beschichtungssysteme, insbesondere Lacke, Farben und dergleichen, Kunststoffe, Schaumstoffe, Kosmetika, insbesondere Nagellacke, Klebstoffe und Dichtungsmassen, enthaltend eine Dispersion nach einem der Ansprüche 1 bis 11.

15. Verfahren zur Stabilisierung einer Dispersion von anorganischen Nanopartikeln, wobei die Dispersion anorganische Nanopartikel in einem Dispersionsmittel enthält,
**dadurch gekennzeichnet,**
**daß** der Dispersion eine Kombination von
(i) modifiziertem Polyurethan und
(ii) modifiziertem Harnstoff
zugesetzt wird,
- wobei das modifizierte Polyurethan (i)
der allgemeinen Formel (I) 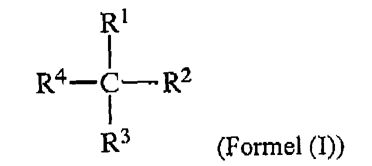 wobei in der Formel (I) die Reste R₁, R₂, R₃ und R₄, jeweils unabhängig voneinander, einen Rest der folgenden allgemeinen Formel 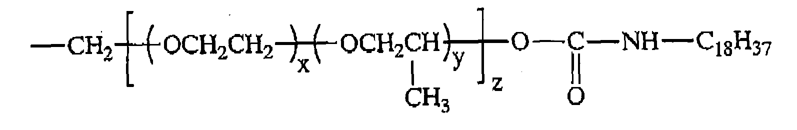 darstellen, wobei in der vorbezeichneten Formel x = 4 ist, y = 1 ist und z = 5 bis 25 ist;
entspricht; und
- wobei der modifizierte Harnstoff (ii)
der allgemeinen Formel (II) 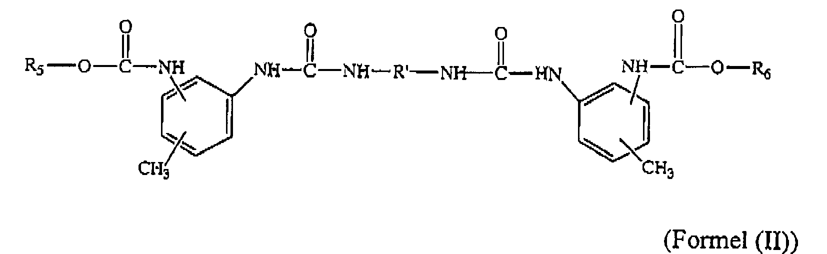 wobei in der Formel (II)
• R' einen der folgenden Reste bezeichnet:
-CₚH₂ₚ- mit p = 2 bis 12;
-(C_{q}H_{2q}-O-C_{q}H_{2q})ᵣ- mit q = 2 bis 4 und r = 1 bis 10; 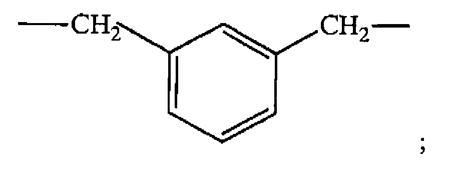 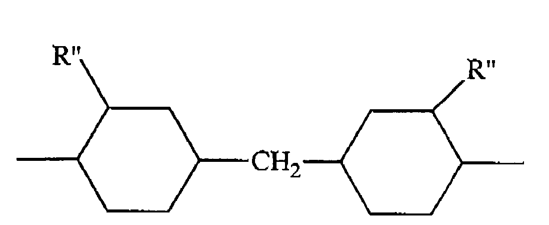 mit R"= H oder CH₃; 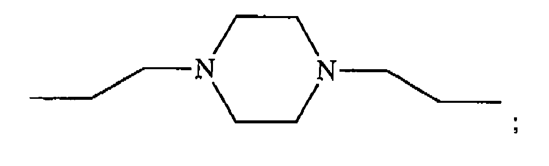
• R₅ und R₆, jeweils unabhängig voneinander, einen der folgenden Reste darstellen:
einen n-Alkylrest oder einen iso-Alkylrest mit 4 bis 22 C-Atomen;
einen Alkenylrest mit 3 bis 18 C-Atomen;
einen Cycloalkylrest;
einen Aralkylrest;
einen Rest der Formel CₘH₂ₘ₊₁(O-CₙH₂ₙ)ₓ-, wobei m = 1 bis 22 ist, n = 2 bis 4 ist und x = 1 bis 15 ist;
einen Rest der Formel CₘH₂ₘ₊₁(OOC-CᵥH₂ᵥ)ₓ-, wobei m = 1 bis 22 ist, n = 2 bis 4 ist, x = 1 bis 15 ist und v = 4 oder 5;
einen Rest der Formel Z-C₆H₄(O-CₙH₂ₙ)ₓ-, wobei n = 2 bis 4 ist, x = 1 bis 15 ist und Z einen Alkylrest mit 1 bis 12 C-Atomen bezeichnet,
oder aber der allgemeinen Formel (II') 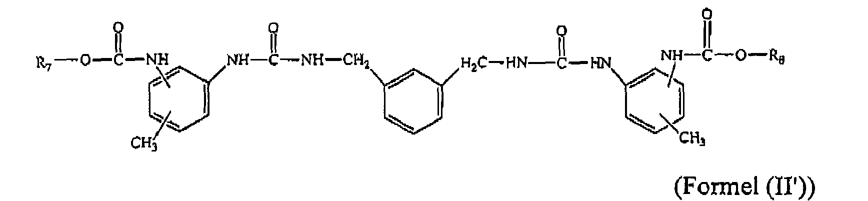 wobei in der Formel (II')
R₇ und R₈, jeweils unabhängig voneinander, einen der folgenden Reste 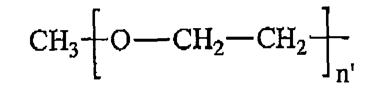 mit n' = 7 bis 16 oder 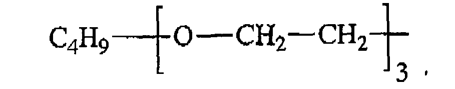 darstellen,
entspricht.

## Claims

1. Stable dispersion of inorganic nanoparticles, comprising inorganic nanoparticles in a dispersion medium,
**characterized**
**in that** added to the dispersion is a combination of
(i) modified polyurethane and
(ii) modified urea,
- where the modified polyurethane (i)
is of the general formula (I) 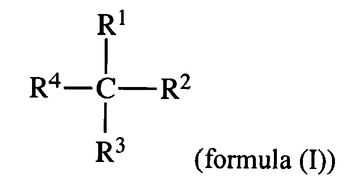
where in the formula (I) the radicals R¹, R², R³ and R⁴, in each case independently of one another, are a radical of the following general formula 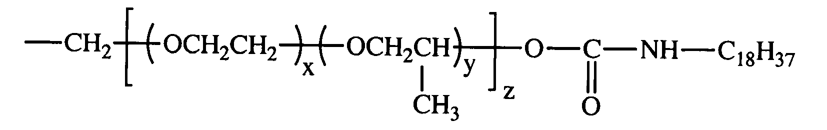 where in the above-identified formula x is 4, y is 1 and z is 5 to 25; and
- where the modified urea (ii)
is of the general formula (II) 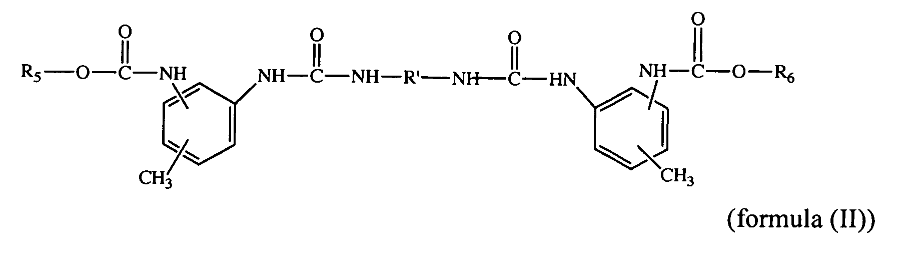
where in the formula (II)
• R' identifies one of the following radicals:
-CₚH₂ₚ- where p = 2 to 12;
-(C_{q}H_{2q}-O-C_{q}H_{2q})ᵣ- where q = 2 to 4 and r = 1 to 10; 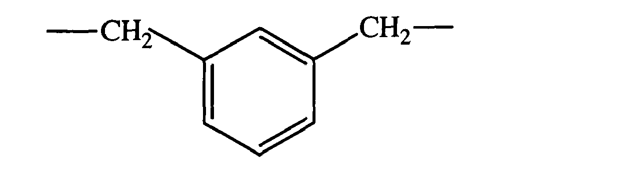 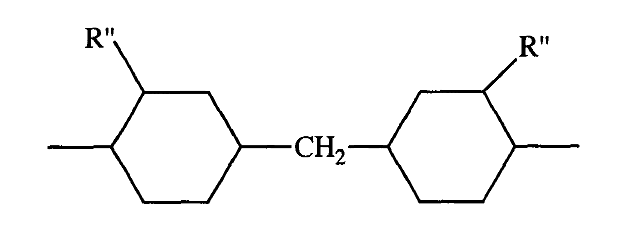 where R" = H or CH₃; 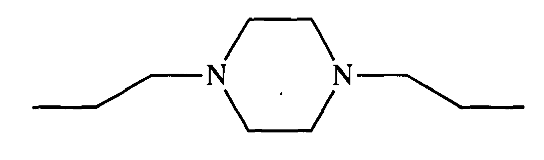
• R₅ and R₆, in each case independently of one another, are one of the following radicals:
an n-alkyl radical or an isoalkyl radical having 4 to 22 C atoms;
an alkenyl radical having 3 to 18 C atoms;
a cycloalkyl radical;
an aralkyl radical;
a radical of the formula CₘH₂ₘ₊₁(O-CₙH₂ₙ)ₓ-, where m is 1 to 22, n is 2 to 4 and x is 1 to 15;
a radical of the formula CₘH₂ₘ₊₁(OOC-CᵥH₂ᵥ)ₓ-, where m is 1 to 22, n is 2 to 4, x is 1 to 15 and v is 4 or 5;
a radical of the formula Z-C₆H₄(O-CₙH₂ₙ)ₓ-, where n is 2 to 4, x is 1 to 15 and Z identifies an alkyl radical having 1 to 12 C atoms,
or else of the general formula (II') 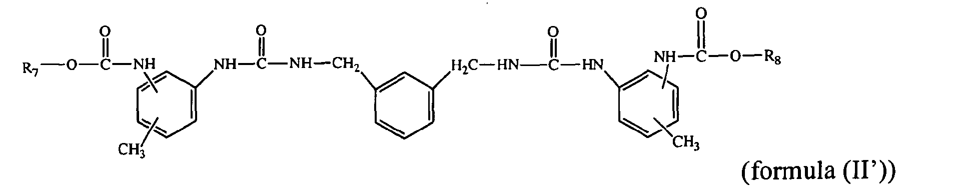 where in the formula (II')
R₇ and R₈, in each case independently of one another, are one of the following radicals: 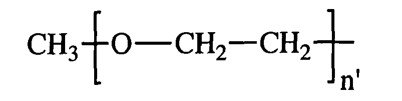 where n' = 7 to 16 or

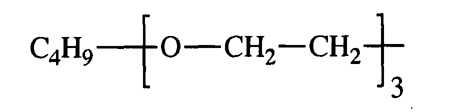

2. Dispersion according to Claim 1, **characterized in that** (i) the modified polyurethane is added in amounts of 0.002 % to 5 % by weight, more particularly 0.005 % to 2 % by weight, preferably 0.01 % to 1 % by weight, more preferably 0.05 % to 0.75 % by weight, very preferably 0.1 % to 0.5 % by weight, based on the dispersion, and/or **in that** (ii) the modified urea is added in amounts of 0.001 % to 2 % by weight, more particularly 0.002 % to 1.5 % by weight, preferably 0.01 % to 1 % by weight, more preferably 0.05 % to 0.3 % by weight, based on the dispersion.

3. Dispersion according to Claim 1 or 2, **characterized in that** the combination of (i) modified polyurethane and (ii) modified urea is added in a weight-based proportion of (i) to (ii) of ≥ 1 : 1, more particularly ≥ 2 : 1, preferably ≥ 3 : 1, and/or **in that** the combination is added in a weight-based proportion of (i) to (ii) in the range from 10 : 1 to 1 : 1, more particularly 7 : 1 to 1.5 : 1, preferably 6 : 1 to 2 : 1, more preferably 5 : 1 to 3 : 1.

4. Dispersion according to any of the preceding claims, **characterized in that** the dispersion comprises the combination of (i) modified polyurethane and (ii) modified urea in a total amount of 0.003 % to 7 % by weight, more particularly 0.005 % to 5 % by weight, preferably 0.01 % to 3 % by weight, more preferably 0.1% to 2 % by weight, based on the dispersion.

5. Dispersion according to any of the preceding claims, **characterized in that** the dispersion has a dynamic Brookfield viscosity in accordance with ASTM D 2196 at 5 rpm and 23 °C of not more than 25 000 mPa·s, more particularly not more than 20 000 mPa·s, and/or **in that** the dispersion has a dynamic Brookfield viscosity in accordance with ASTM D 2196 at 5 rpm and 23 °C in the range from 1000 to 25 000 mPa·s, more particularly 1250 to 20 000 mPa·s, preferably 1500 to 15 000 mPa·s, preferably 2000 to 10 000 mPa·s.

6. Dispersion according to any of the preceding claims, **characterized in that** the dispersion has a dynamic Brookfield viscosity in accordance with ASTM D 2196 at 50 rpm and 23 °C of not more than 7000 mPa·s, more particularly not more than 5000 mPa·s, and/or **in that** the dispersion has a dynamic Brookfield viscosity in accordance with ASTM D 2196 at 50 rpm and 23 °C in the range from 500 to 7000 mPa·s, more particularly 750 to 6000 mPa·s, preferably 900 to 5000 mPa·s, preferably 1000 to 4000 mPa·s.

7. Dispersion according to any of the preceding claims, **characterized in that** the inorganic nanoparticles have particle sizes in the range from 0.5 to 2000 nm, more particularly 1 to 1000 nm, preferably 2 to 750 nm, more preferably 2 to 500 nm, very preferably 5 to 300 nm, especially preferably 5 to 100 nm.

8. Dispersion according to any of the preceding claims, **characterized in that** the inorganic nanoparticles are formed of at least one undoped or doped oxide, hydroxide, oxide hydroxide, sulphate, phosphate, sulphide, carbonate, nitride, silicate, carbide, vanadate, molybdate, tungstate and/or halide, more particularly fluoride, of at least one metal or semi-metal or else of a metal/element or else of mixtures or combinations of such compounds, preferably of at least one inorganic oxide, hydroxide or oxide hydroxide, more preferably an inorganic oxide, or comprise this or these compounds.

9. Dispersion according to any of the preceding claims, **characterized in that** the inorganic nanoparticles are formed of at least one undoped or doped oxide, hydroxide and/or oxide hydroxide, preferably oxide, of aluminium, silicon, zinc, titanium, cerium, indium, antimony, tin and/or iron, an alkaline earth metal sulphate, an alkaline earth metal phosphate or lanthanum phosphate, a cadmium or zinc sulphide, an alkaline earth metal carbonate, an aluminium or silicon nitride, an alkaline earth metal silicate, a silicon carbide or silver, or else of mixtures or combinations of such compounds, or comprise this or these compounds.

10. Dispersion according to any of the preceding claims, **characterized in that** the inorganic nanoparticles are formed of at least one undoped or doped oxide, hydroxide and/or oxide hydroxide, preferably oxide, of aluminium, silicon, zinc, titanium, cerium, indium, antimony, tin and/or iron or comprise this or these compounds and/or **in that** the inorganic nanoparticles are formed on the basis of zinc oxide, indium/tin oxides (ITO) or antimony/tin oxides (ATO) and/or **in that** the inorganic nanoparticles are zinc oxide particles, indium/tin-oxidic particles (ITO particles) or antimony/tin-oxidic particles and/or **in that** the inorganic nanoparticles are of surface-modified form, more particularly surface-modified by means of polysiloxane groups.

11. Dispersion according to any of the preceding claims, **characterized in that** the dispersion is storage-stable, more particularly sedimentation-stable, the dispersion being storage-stable at a temperature of 20 °C and under atmospheric pressure (1013 mPa) over a storage period of at least 3 months, more particularly at least 6 months, preferably at least 9 months, more preferably at least 12 months, and/or where, after a storage period of 6 months at a temperature of 20 °C and under atmospheric pressure (1013 mPa), less than 10 % by weight, more particularly less than 5 % by weight, preferably less than 3 % by weight, of the inorganic nanoparticles, based on the inorganic nanoparticles, have undergone sedimentation.

12. Use of a dispersion according to the preceding claims in coating materials or coating systems, more particularly paints, inks and the like, in dispersions of all kinds, in plastics, in foams, in cosmetics, more particularly nail varnishes, in adhesives and in sealants.

13. Use according to Claim 12 for improving the mechanical properties, more particularly for raising the wear resistance, preferably the scratch resistance and/or abrasion resistance, and/or for improving the UV stability and/or for improving the weathering properties and/or for improving the optical properties and/or for optical identification by means more particularly of luminescent substances.

14. Coating materials and coating systems, more particularly paints, inks and the like, plastics, foams, cosmetics, more particularly nail varnishes, adhesives and sealants comprising a dispersion according to any of Claims 1 to 11.

15. Method of stabilizing a dispersion of inorganic nanoparticles, the dispersion comprising inorganic nanoparticles in a dispersion medium, **characterized**
**in that** added to the dispersion is a combination of
(i) modified polyurethane and
(ii) modified urea,
- where the modified polyurethane (i)
is of the general formula (I) 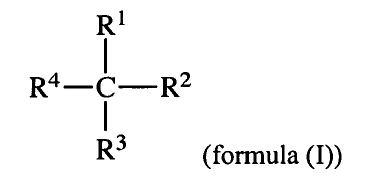 where in the formula (I) the radicals R¹, R², R³ and R⁴, in each case independently of one another, are a radical of the following general formula 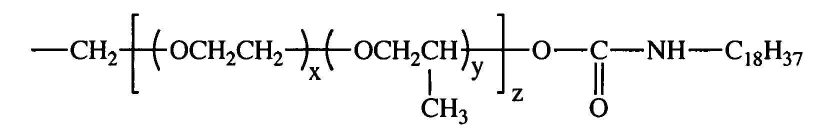 where in the above-identified formula x is 4, y is 1 and z is 5 to 25; and
- where the modified urea (ii)
is of the general formula (II) 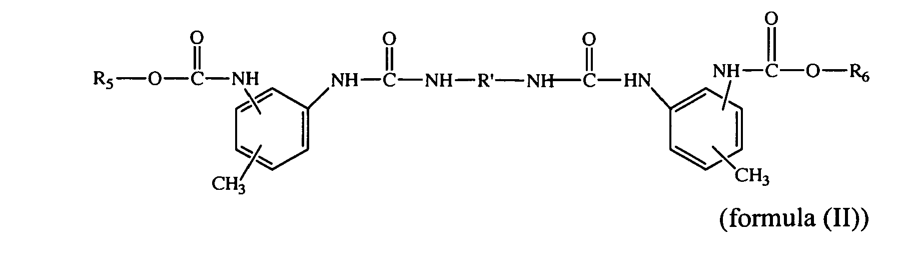
where in the formula (II)
• R' identifies one of the following radicals:
-CₚH₂ₚ- where p = 2 to 12;
-(C_{q}H_{2q}-O-C_{q}H_{2q})ᵣ- where q = 2 to 4 and r = 1 to 10; 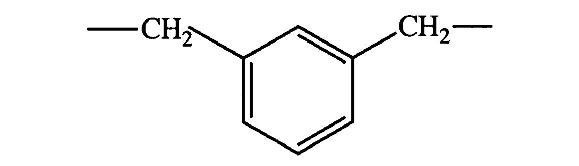 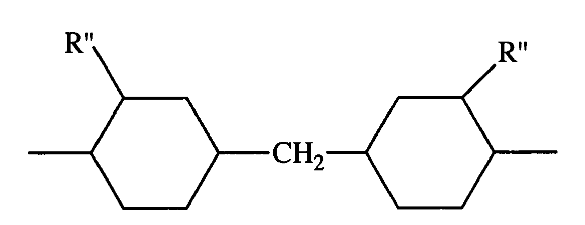
where R" = H or CH₃; 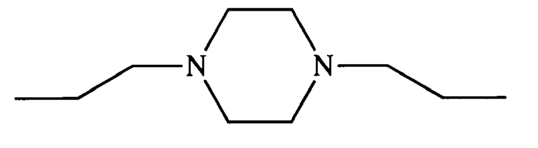
• R₅ and R₆, in each case independently of one another, are one of the following radicals:
an n-alkyl radical or an isoalkyl radical having 4 to 22 C atoms;
an alkenyl radical having 3 to 18 C atoms;
a cycloalkyl radical;
an aralkyl radical;
a radical of the formula CₘH₂ₘ₊₁(O-CₙH₂ₙ)ₓ-, where m is 1 to 22, n is 2 to 4 and x is 1 to 15;
a radical of the formula CₘH₂ₘ₊₁(OOC-CᵥH₂ᵥ)ₓ-, where m is 1 to 22, n is 2 to 4, x is 1 to 15 and v is 4 or 5;
a radical of the formula Z-C₆H₄(O-CₙH₂ₙ)ₓ-, where n is 2 to 4, x is 1 to 15 and Z identifies an alkyl radical having 1 to 12 C atoms,
or else of the general formula (II') 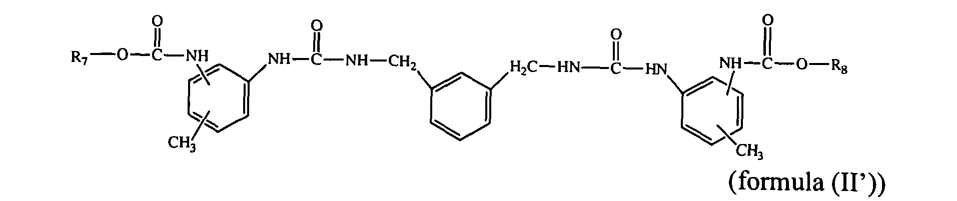 where in the formula (II')
R₇ and R₈, in each case independently of one another, are one of the following radicals: 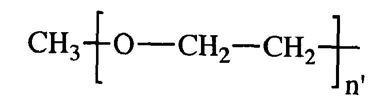 where n' = 7 to 16 or

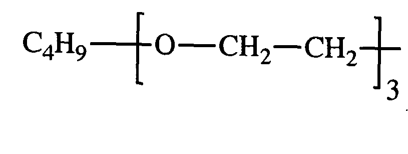

## Revendications

1. Dispersion stable de nanoparticules inorganiques, contenant des nanoparticules inorganiques dans un dispersant,
**caractérisée en ce**
**que** la dispersion est additionnée d'une combinaison de
(i) polyuréthane modifié et
(ii) urée modifiée
où le polyuréthane modifié (i) correspond à la formule générale (I) 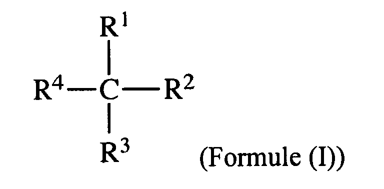 où, dans la formule (I), les radicaux R¹, R², R³ et R⁴, à chaque fois indépendamment l'un de l'autre, représentent un radical de la formule générale suivante 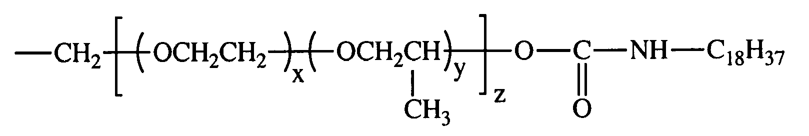 où, dans la formule désignée ci-dessus, x = 4, y = 1 et z = 5 à 25; et
où l'urée modifiée (ii) correspond à la formule générale (II) 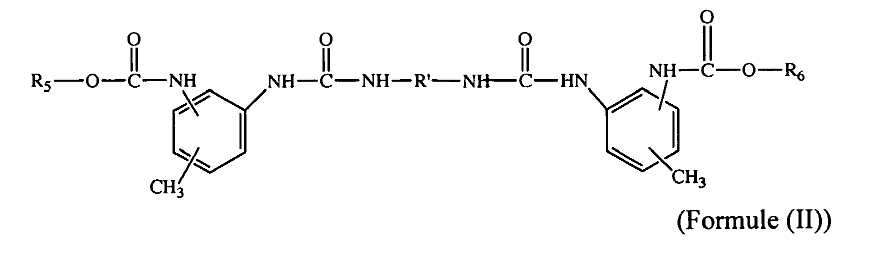 où, dans la formule (II)
R' désigne un des radicaux suivants:
-CₚH₂ₚ- avec p = 2 à 12;
-(C_{q}H_{2q}-O-C_{q}H_{2q})ᵣ- avec q = 2 à 4 et r = 1 à 10; 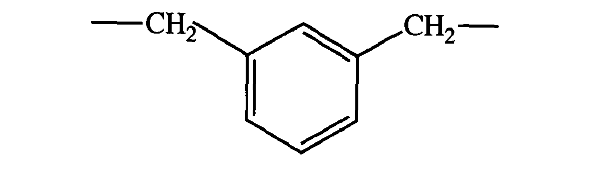 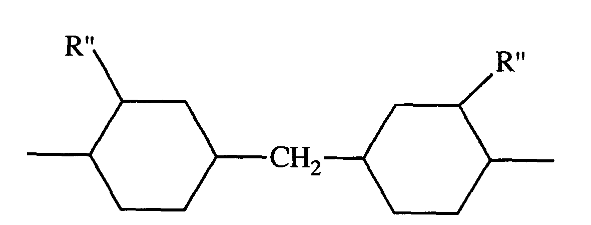
avec R" = H ou CH₃; 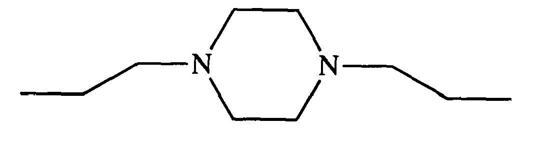 R₅ et R₆, à chaque fois indépendamment l'un de l'autre, représentent un des radicaux suivants:
un radical n-alkyle ou un radical iso-alkyle comprenant 4 à 22 atomes de carbone;
un radical alcényle comprenant 3 à 18 atomes de carbone;
un radical cycloalkyle;
un radical aralkyle;
un radical de formule CₘH₂ₘ₊₁(O-CₙH₂ₙ)ₓ-, où m = 1 à 22, n = 2 à 4 et x = 1 à 15;
un radical de formule CₘH₂ₘ₊₁(OOC-CᵥH₂ᵥ)ₓ-, où m = 1 à 22, n = 2 à 4, x = 1 à 15 et v = 4 ou 5;
un radical de formule Z-C₆H₄(O-CₙH₂ₙ)ₓ-, où n = 2 à 4, x = 1 à 15 et Z désigne un radical alkyle comprenant 1 à 12 atomes de carbone,
ou alors à la formule générale (II') 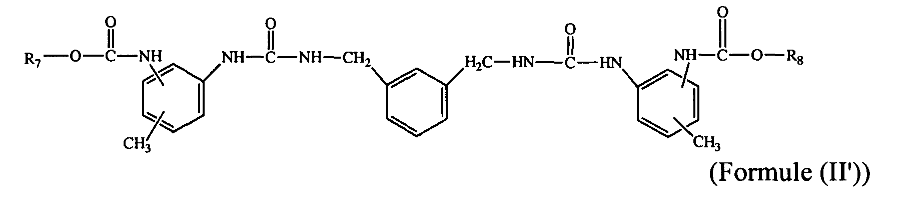
où, dans la formule (II')
R₇ et R₈, à chaque fois indépendamment l'un de l'autre, représentent un des radicaux suivants 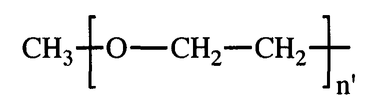
avec n' = 7 à 16 ou

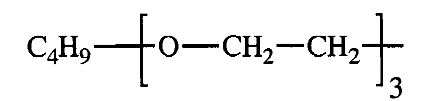

2. Dispersion selon la revendication 1, **caractérisée en ce que** (i) le polyuréthane modifié est ajouté en des quantités de 0,002 à 5 % en poids, en particulier de 0,005 à 2 % en poids, de préférence de 0,01 à 1 % en poids, de manière particulièrement préférée de 0,05 à 0,75 % en poids, de manière tout particulièrement préférée de 0,1 à 0,5 % en poids, par rapport à la dispersion et/ou **en ce que** (ii) l'urée modifiée est ajoutée en des quantités de 0,001 à 2 % en poids, en particulier de 0,002 à 1,5 % en poids, de préférence de 0,01 à 1 % en poids, de manière particulièrement préférée de 0,05 à 0,3 % en poids, par rapport à la dispersion.

3. Dispersion aqueuse selon la revendication 1 ou 2, **caractérisée en ce que** la combinaison de (i) le polyuréthane modifié et de (ii) l'urée modifiée est ajoutée dans un rapport de quantités se rapportant au poids de (i) à (ii) qui est ≥ 1:1, en particulier ≥ 2:1, de préférence ≥ 3:1, et/ou **en ce que** la combinaison est ajoutée en un rapport de quantités se rapportant au poids de (i) à (ii) dans la plage de 10:1 à 1:1, en particulier de 7:1 à 1,5:1, de préférence de 6:1 à 2:1, de manière particulièrement préférée de 5:1 à 3:1.

4. Dispersion selon quelconque l'une des revendications précédentes, **caractérisée en ce que** la dispersion contient la combinaison de (i) le polyuréthane modifié et de (ii) l'urée modifiée en une quantité totale de 0,003 à 7 % en poids, en particulier de 0,005 à 5 % en poids, de préférence de 0,01 à 3 % en poids, de manière particulièrement préférée de 0,1 à 2 % en poids, par rapport à la dispersion.

5. Dispersion selon quelconque l'une des revendications précédentes, **caractérisée en ce que** la dispersion présente une viscosité dynamique de Brookfield selon la norme ASTM D 2196 à 5 t/min et à 23 °C d'au plus 25 000 mPa.s, en particulier d'au plus 20 000 mPa.s et/ou **en ce que** la dispersion présente une viscosité dynamique de Brookfield selon la norme ASTM D 2196 à 5 t/min et à 23 °C dans la plage de 1000 à 25 000 mPa.s, en particulier de 1250 à 20 000 mPa.s, de préférence de 1500 à 15 000 mPa.s, de préférence de 2000 à 10 000 mPa.s.

6. Dispersion selon quelconque l'une des revendications précédentes, **caractérisée en ce que** la dispersion présente une viscosité dynamique de Brookfield selon la norme ASTM D 2196 à 50 t/min et à 23 °C d'au plus 7000 mPa.s, en particulier d'au plus 5000 mPa.s et/ou **en ce que** la dispersion présente une viscosité dynamique de Brookfield selon la norme ASTM D 2196 à 50 t/min et à 23 °C dans la plage de 500 à 7000 mPa.s, en particulier de 750 à 6000 mPa.s, de préférence de 900 à 5000 mPa.s, de préférence de 1000 à 4000 mPa.s.

7. Dispersion selon quelconque l'une des revendications précédentes, **caractérisée en ce que** les nanoparticules inorganiques présentent des grosseurs de particule dans la plage de 0,5 à 2000 nm, en particulier de 1 à 1000 nm, de préférence de 2 à 750 nm, de préférence de 2 à 500 nm, de manière particulièrement préférée de 5 à 300 nm, de manière tout particulièrement préférée de 5 à 100 nm.

8. Dispersion selon quelconque l'une des revendications précédentes, **caractérisée en ce que** les nanoparticules inorganiques sont formées par au moins un oxyde, hydroxyde, oxyde-hydroxyde, sulfate, phosphate, sulfure, carbonate, nitrure, silicate, carbure, vanadate, molybdate, tungsténate et/ou halogénure, en particulier un fluorure, le cas échéant dopé(s), au moins un métal ou un semi-métal ou alors par un métal/élément ou alors par des mélanges ou des combinaisons de ces composés, de préférence par au moins un oxyde, hydroxyde ou oxyde-hydroxyde inorganique, de manière particulièrement préférée un oxyde inorganique, ou contiennent ce(s) composé(s).

9. Dispersion selon quelconque l'une des revendications précédentes, **caractérisée en ce que** les nanoparticules inorganiques sont formées par au moins un oxyde, hydroxyde et/ou oxyde-hydroxyde, le cas échéant dopé(s), de préférence un oxyde, de l'aluminium, du silicium, du zinc, du titane, du cérium, de l'indium, de l'antimoine, de l'étain et/ou du fer, un sulfate de métal alcalino-terreux, un phosphate de métal alcalino-terreux ou de lanthane, un sulfure de cadmium ou de zinc, un carbonate de métal alcalino-terreux, un nitrure d'aluminium ou de silicium, un silicate de métal alcalino-terreux, un carbure de silicium ou de l'argent ou alors par des mélanges ou des combinaisons de ces composés ou contiennent ce(s) composé(s).

10. Dispersion selon quelconque l'une des revendications précédentes, **caractérisée en ce que** les nanoparticules inorganiques sont formées par au moins un oxyde, hydroxyde et/ou oxyde-hydroxyde, le cas échéant dopé(s), de préférence un oxyde, de l'aluminium, du silicium, du zinc, du titane, du cérium, de l'indium, de l'antimoine, de l'étain et/ou du fer ou contiennent ce(s) composé(s) et/ou **en ce que** les nanoparticules inorganiques sont formées à base d'oxyde de zinc, d'oxydes d'indium/étain (ITO) ou d'oxydes d'antimoine/étain (ATO) et/ou **en ce que** les nanoparticules inorganiques sont des particules d'oxyde de zinc, des particules d'oxyde d'indium/d'étain (particules ITO) ou des particules d'oxyde d'antimoine/d'étain et/ou **en ce que** les nanoparticules inorganiques sont à surface modifiée, en particulier à surface modifiée au moyen de groupes polysiloxane.

11. Dispersion selon quelconque l'une des revendications précédentes, **caractérisée en ce que** la dispersion est réalisée de manière à être stable à l'entreposage, en particulier stable à la sédimentation, la dispersion étant réalisée de manière à être stable à l'entreposage à une température de 20 °C et à la pression atmosphérique (1013 mPa) sur un laps de temps d'entreposage d'au moins 3 mois, en particulier d'au moins 6 mois, de préférence d'au moins 9 mois, de préférence d'au moins 12 mois et/ou, après un temps d'entreposage de 6 mois à une température de 20 °C et à la pression atmosphérique (1013 mPa), moins de 10 % en poids, en particulier moins de 5 % en poids, de préférence moins de 3 % en poids, des nanoparticules inorganiques, par rapport aux particules inorganiques, étant sédimentés.

12. Utilisation d'une dispersion selon les revendications précédentes dans des substances de revêtement et des systèmes de revêtement, en particulier des laques, des encres et analogues, dans des dispersions de tous types, dans des matériaux synthétiques, dans des mousses, dans des cosmétiques, en particulier des vernis à ongles, dans des adhésifs et dans des masses d'étanchéité.

13. Utilisation selon la revendication 12 pour améliorer les propriétés mécaniques, en particulier pour augmenter la résistance à l'usure, de préférence la résistance aux griffes et/ou au frottement, et/ou par améliorer la résistance aux UV et/ou pour améliorer les propriétés de résistance aux conditions climatiques et/ou pour améliorer les propriétés optiques et/ou pour la caractérisation optique, en particulier au moyen de substances luminescentes.

14. Substances de revêtement et systèmes de revêtement, en particulier laques, encres et analogues, matériaux synthétiques, mousses, cosmétiques, en particulier vernis à ongles, adhésifs et masses d'étanchéité, contenant une dispersion selon l'une quelconque des revendications 1 à 11.

15. Procédé pour la stabilisation d'une dispersion de nanoparticules inorganiques, où la dispersion contient des nanoparticules inorganiques dans un dispersant, **caractérisé en ce que** la dispersion est additionnée d'une combinaison de
(i) polyuréthane modifié et
(ii) urée modifiée
où le polyuréthane modifié (i) correspond à la formule générale (I) 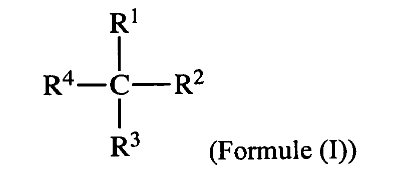 où, dans la formule (I), les radicaux R¹, R², R³ et R⁴, à chaque fois indépendamment l'un de l'autre, représentent un radical de la formule générale suivante 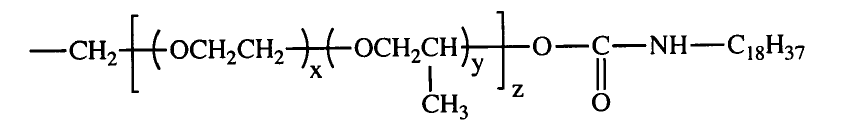 où, dans la formule désignée ci-dessus, x = 4, y = 1 et z = 5 à 25; et
où l'urée modifiée (ii) correspond à la formule générale (II) 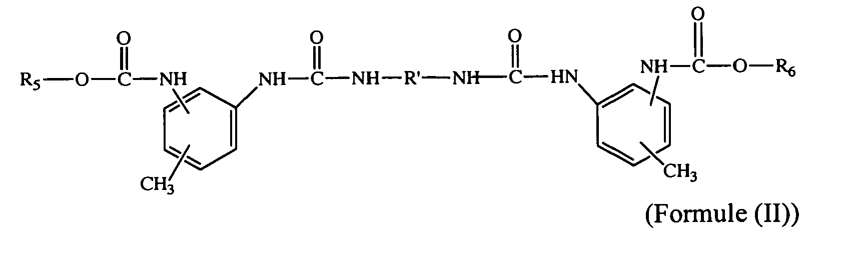
où, dans la formule (II)
R' désigne un des radicaux suivants:
-CₚH₂ₚ- avec p = 2 à 12;
-(CₚH_{2q}-O-C_{q}H_{2q})ᵣ- avec q = 2 à 4 et r = 1 à 10; 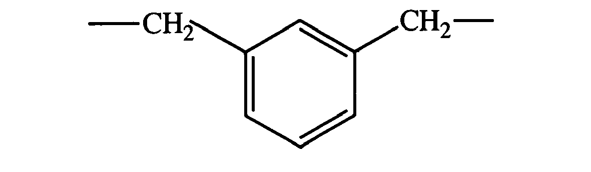 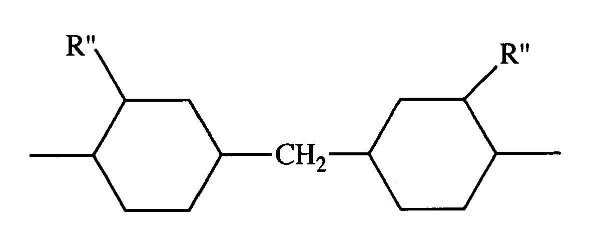 avec R" = H ou CH₃; 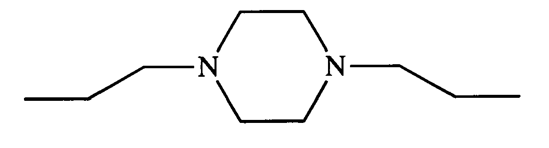
R₅ et R₆, à chaque fois indépendamment l'un de l'autre, représentent un des radicaux suivants:
un radical n-alkyle ou un radical iso-alkyle comprenant 4 à 22 atomes de carbone;
un radical alcényle comprenant 3 à 18 atomes de carbone;
un radical cycloalkyle;
un radical aralkyle;
un radical de formule CₘH₂ₘ₊₁(O-CₙH₂ₙ)ₓ-, où m = 1 à 22, n = 2 à 4 et x = 1 à 15;
un radical de formule CₘH₂ₘ₊₁(OOC-CᵥH₂ᵥ)ₓ-, où m = 1 à 22, n = 2 à 4, x = 1 à 15 et v = 4 ou 5;
un radical de formule Z-C₆H₄(O-CₙH₂ₙ)ₓ-, où n = 2 à 4, x = 1 à 15 et Z désigne un radical alkyle comprenant 1 à 12 atomes de carbone,
ou alors à la formule générale (II') 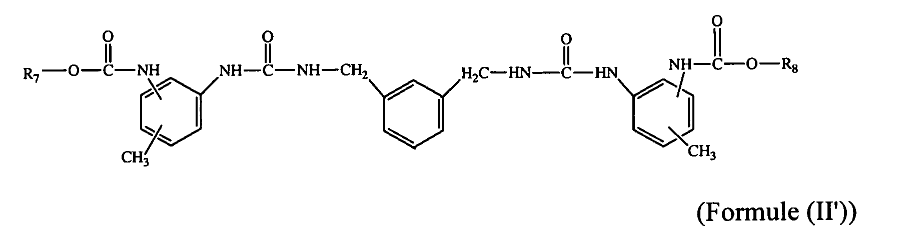 où, dans la formule (II')
R₇ et R₈, à chaque fois indépendamment l'un de l'autre, représentent un des radicaux suivants 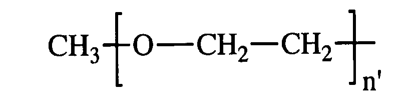 avec n' = 7 à 16 ou
